# EUROPÄISCHE PATENTSCHRIFT

(11) **EP 4 605 106 B1**
(45) Veröffentlichungstag und Bekanntmachung des Hinweises auf die Patenterteilung: **22.07.2026**
(21) Anmeldenummer: 23789911.7
(22) Anmeldetag: 11.10.2023
(51) Int. Cl.: B01D 45/08

(54) **LUFTSTROMABSCHEIDEELEMENT**
AIR FLOW SEPARATION ELEMENT
ÉLÉMENT DE SÉPARATION DE FLUX D'AIR

(30) Priorität: 18.10.2022 DE 202022105864 U
(43) Veröffentlichungstag der Anmeldung: 27.08.2025
(73) Patentinhaber: NeuFilter GmbH, 48599 Gronau (DE)
(72) Erfinder: HERLINGER, Florian, 48599 Gronau (DE); BÖING, Thomas, 48599 Gronau (DE); HENKE, Daniel, 48599 Gronau (DE)
(74) Vertreter: Werner & ten Brink PAe PartGes mbB Bentheim
(86) Internationale Anmeldenummer: PCT/EP2023/078253
(87) Internationale Veröffentlichungsnummer: WO 2024/083619

(56) Entgegenhaltungen:
- CN-A- 111 714 992
- DE-A1- 102014 003 608
- US-A- 3 744 222

## Beschreibung

Die hier vorgeschlagene Neuerung betrifft das technische Gebiet des Abscheidens von mit einem Luftstrom (Rohgasstrom) mitgeführten Partikeln, insbesondere das Abscheiden von mit einem sogenannten Farbnebel als Rohgasstrom mitgeführten Farb- oder Lackpartikeln, also das technische Gebiet der Farbnebelabscheidung.

Vorrichtungen, nämlich Luftstromabscheidevorrichtungen (kurz: Abscheidevorrichtungen), zu diesem Zweck sind bereits bekannt, zum Beispiel in Form der in der EP 2 532 409 B beschriebenen und dort als Filtermodul bezeichneten Abscheidevorrichtung oder in Form der in der DE 10 2014 003 608 A1 beschriebenen und dort eben-falls als Filtermodul bezeichneten Abscheidevorrichtung.

Eine Aufgabe der vorgeschlagenen Neuerung besteht darin, eine neue Form eines Luftstromabscheideelements anzugeben, das zur Verwendung mit oder in einer Luftstromabscheidevorrichtung bestimmt ist, jedenfalls zum Abscheiden von mit einem Rohgasstrom mitgeführten Partikeln verwendbar ist.

Luftstromabscheideelemente sind ebenfalls bereits bekannt. Es handelt sich um flächige Elemente, die entweder einen eigenen rahmenartigen Rand aufweisen oder mit einem rahmenartigen Rand versehen werden und mittels dieses Rands mit anderen Luftstromabscheideelementen und/oder einer Luftstromabscheidevorrichtung kombiniert werden. Ein Luftstromabscheideelement weist zum Durchtritt des Rohgasstroms eine Mehrzahl von Öffnungen (Löcher) auf. Eine jeweilige Anordnung und eine Anzahl der Löcher ergeben/bestimmen ein Lochmuster des jeweiligen Luftstromabscheideelements.

Aus der DE 10 2014 004 608 A1 ist eine Luftstromabscheidevorrichtung mit einer Vielzahl von in Strömungsrichtung eines Rohgasstroms hintereinander angeordneten Luftstromabscheideelementen bekannt. Die einzelnen Luftstromabscheideelementen weisen dabei flächige Abscheidebereiche mit Durchströmungsöffnungen und seitlichen Verbindungslaschen auf, wobei sich die Verbindungslaschen senkrecht zu den Abscheidebereichen erstrecken und die Luftstromabscheideelemente jeweils voneinander beabstanden. Aus der EP 2 722 092 A1 sind Luftfilter bekannt, bei denen in einen Rahmen Filtermedien eingesetzt werden. Aus der EP 3 325 128 A1 ist ein Filterstrukturkörper für ein Filtermodul bekannt, der eine in Segmente unterteilte Stützstruktur und eine darauf angeordnete Filterlage umfasst. Aus der US 4,561,587 und der US 7,537,632 sind zur Aufnahme eines Luftfilters bestimmte Rahmen mit verschließbaren Ecken bekannt, die durch Falten aus einem zunächst flachen, einstückigen Pappelement entstehen. Aus der US 2009/0183477 A1 sind Rahmen mit seitlich ab- und überstehenden Segmenten für Luftfilter bekannt, wobei die Segmente ein Stapeln mehrerer Rahmen erlauben und eine Justierung der Rahmen relativ zueinander innerhalb des Stapels bewirken. Aus der CN 113842715 B sind Luftstromabscheideelemente bekannt, die mittels kammartiger Verbindungsstücke in Gruppen miteinander kombinierbar sind, so dass sich die Luftstromabscheideelemente in zueinander paralleler Anordnung gestaffelt hintereinander befinden. Aus der CN 209985061 U ist ein einzelnes Luftstromabscheideelement bekannt, das mit einem eigenen Rahmen vor einer Luftstromabscheidevorrichtung platzierbar ist. Aus der CN 216149343 U sind Luftstromabscheideelemente bekannt, die miteinander und in einer Anordnung gestaffelt hintereinander in einem gemeinsamen Rahmen platzierbar sind. Aus der CN 111714992 A ist eine Abscheidevorrichtung bekannt, bei der eine Vielzahl von Wandungen bezüglich einer Luftströmung hintereinander angeordnet sind. Diese Wandungen weisen zum Teil Führungsöffnungen auf, die lediglich zur Erzeugung eines Labyrinths benutzt werden. In der nicht vorveröffentlichten DE 20 2022 102 215.1 sind ein Luftstromabscheideelement und eine damit gebildete Luftstromabscheidevorrichtung beschrieben. Die US 3,744,222 A zeigt Abscheideelemente mit seitlichen Abstandslaschen.

Die oben skizzierte Aufgabe wird erfindungsgemäß mittels einer hier und im Folgenden als Luftstromabscheideelement und mitunter kurz nur als Abscheideelement bezeichneten Vorrichtung mit den Merkmalen des Anspruchs 1 gelöst.

Danach ist das Luftstromabscheideelement zum Abscheiden von mit einem Rohgasstrom mitgeführten Partikeln bestimmt und hergerichtet. Eine mögliche alternative Langform zur Bezeichnung des Luftstromabscheideelements lautet Rohgasstrompartikelabscheideelement/Luftpartikelabscheideelement oder - im Falle einer Abscheidung von Partikeln aufgrund eines Farbnebels - Farbnebelabscheideelement. Im Interesse einer besseren Lesbarkeit der hier vorgelegten Beschreibung wird aber im Weiteren oftmals die Kurzform "Abscheideelement" verwendet, wobei bei jeder Erwähnung dieses Begriffs auch der Begriff Luftstromabscheideelement sowie die obigen Langformen mitzulesen sind. Gleiches gilt entsprechend auch für erst weiter unten eingeführte Begriffe, nämlich Abscheidekombination (mögliche Langformen: Luftstromabscheidekombination; Rohgasstrom-/Luftpartikelabscheidekombination oder Farbnebelabscheidekombination) oder Abscheidevorrichtung (mögliche Langformen: Luftstromabscheidevorrichtung; Rohgasstrom-/Luftpartikelabscheidevorrichtung oder Farbnebelabscheidevorrichtung).

Das Abscheideelement (Luftstromabscheideelement) weist einen Abscheidebereich (Luftstromabscheidebereich), Einsteckbereiche und an den Abscheidebereich anschließende oder von dem Abscheidebereich ausgehende und im Folgenden als Verbindungslaschen oder kurz als Laschen bezeichnete Verbindungsmittel auf. An den Abscheidebereich anschließende Verbindungslaschen sind mit dem Abscheidebereich zum Beispiel einstückig verbunden. Von dem Abscheidebereich ausgehende Verbindungslaschen sind mit dem Abscheidebereich zum Beispiel durch Kleben, Tackern oder dergleichen verbunden.

Die Einsteckbereiche und Verbindungslaschen sind zum lösbaren Verbinden eines Abscheideelements mit einem weiteren Abscheideelement, nämlich einem weiteren Abscheideelement wie hier und im Folgenden beschrieben, bestimmt und hergerichtet. Die Einsteckbereiche befinden sich im Abscheidebereich (innerhalb der Fläche des Abscheidebereichs) oder am Rand des Abscheidebereichs (am Rand der Fläche des Abscheidebereichs). Ein Abscheideelement weist zumindest eine der Anzahl der Verbindungslaschen entsprechende Anzahl von Einsteckbereichen auf, ggf. auch mehr, zum Beispiel vier Einsteckbereiche bei zwei einander gegenüberliegenden Verbindungslaschen.

Die Besonderheit des Abscheideelements besteht darin, dass dieses im Abscheidebereich zumindest eine Tür sowie - entsprechend der Türanzahl - zumindest einen Türeinsteckbereich aufweist. Die oder jede Tür weist zumindest einen Türeinsteckabschnitt auf, der zum Fixieren der Tür in geöffnetem Zustand in einen Türeinsteckbereich, insbesondere einen schlitzförmigen Türeinsteckbereich (Türeinsteckschlitz), eines weiteren Abscheideelements einsteckbar ist. Eine geöffnete Tür in einem Abscheidebereich bewirkt eine Führung des Rohgasstroms, speziell im Falle mehrerer gestaffelt hintereinander angeordneter Abscheideelemente mit jeweils zumindest einer geöffneten Tür. Die resultierende Führung des Rohgasstroms führt zu Richtungsänderungen, Wirbelbildungen und/oder lokalen Änderungen der Strömungsgeschwindigkeit und dies verbessert die Abscheidewirkung eines Abscheideelements sowie mehrerer gestaffelt hintereinander angeordneter Abscheideelemente.

Die Vorrichtung - das Abscheideelement (Luftstromabscheideelement) - ist zum Abscheiden von mit einem Rohgasstrom mitgeführten Partikeln, insbesondere Farbpartikeln, bestimmt und hergerichtet. Das Abscheideelement ist darüber hinaus zur Verwendung in einer Abscheidevorrichtung (Luftstromabscheidevorrichtung) oder zur Verwendung mit einer Abscheidevorrichtung bestimmt. Bei einer Verwendung mit einer Abscheidevorrichtung kommt zum Beispiel eine Abscheidevorrichtung der eingangs genannten Art oder dergleichen in Betracht.

Aufgrund der Bestimmung des Abscheideelements zum Abscheiden von mit einem Rohgasstrom mitgeführten Partikeln, insbesondere Farbpartikeln, kann das hier vorgeschlagene Abscheideelement auch als Rohgasstrompartikelabscheideelement, insbesondere als Farbpartikelabscheideelement/Luftpartikelabscheideelement oder - im Falle einer Abscheidung von Partikeln aufgrund eines Farbnebels - als Farbnebelabscheideelement bezeichnet werden. Jedenfalls ist das hier vorgeschlagene Abscheideelement zur Verwendung in einem Luftstrom bestimmt und wird das hier vorgeschlagene Abscheideelement bei bestimmungsgemäßem Einsatz in einem Luftstrom verwendet. Die Bezeichnung als Luftstromabscheideelement hebt einerseits die Verwendung/Verwendbarkeit in einem Luftstrom und andererseits die Verwendung/Verwendbarkeit zum Abscheiden von mit dem jeweiligen Luftstrom mitgeführten Partikeln hervor. Bei diesen Partikeln handelt es sich beispielsweise um von dem Luftstrom mitgeführte Farbpartikel. Dies hebt die Bezeichnung Farbnebelabscheideelement hervor.

Ein Abscheideelement der hier vorgeschlagenen Art kann mittels der Verbindungslaschen schnell und einfach mit einem weiteren Abscheideelement verbunden werden. Im Ergebnis werden oder sind also zwei oder jeweils zwei Abscheideelemente der hier vorgeschlagenen Art miteinander verbunden. Mit so miteinander verbundenen Abscheideelementen können - mittels der Verbindungslaschen - weitere Abscheideelemente verbunden werden. Eine solche Kombination von Abscheideelementen wird im Folgenden als Luftstromabscheidekombination oder kurz als Abscheidekombination bezeichnet. Eine Abscheidekombination umfasst zumindest zwei mittels der Verbindungslaschen miteinander verbundene Abscheideelemente der hier und im Folgenden beschriebenen Art (zwei, drei, vier oder mehr Abscheideelemente). Indem die Abscheidekombination zumindest zwei solche Abscheideelemente umfasst, umfasst diese jeweils gleiche Abscheideelemente (Gleichteile; jedes Abscheideelement umfasst einen Abscheidebereich, Verbindungslaschen und Einsteckbereiche im Abscheidebereich sowie ggf. zumindest eine Tür, darüber hinausgehend können sich die Abscheideelemente unterscheiden, ohne die Benennung als Gleichteile zu verlassen, zum Beispiel in der Gestaltung der jeweiligen Abscheidebereiche). Eine Abscheidekombination kann auch im Wege einer Verbindung zweier Abscheidekombinationen miteinander entstehen. Auch eine solche Verbindung entsteht mittels der Verbindungslaschen. In einer Abscheidekombination sind die davon umfassten Abscheideelemente gestaffelt hintereinander angeordnet und zwar in durch eine jeweilige wirksame Länge der Verbindungslaschen bestimmten Abständen. Dabei liegen die Abscheidebereiche der von der Abscheidekombination umfassten Abscheideelemente in parallelen oder zumindest im Wesentlichen parallelen Ebenen (Geraden entlang von im Flächenschwerpunkt der Abscheidebereiche errichteten Normalen fallen zusammen oder fallen zumindest im Wesentlichen zusammen). Mit anderen Worten: Bei einem mit einem Abscheideelement (erstes Abscheideelement) verbundenen weiteren Abscheideelement (zweites Abscheideelement) deckt eine Projektion des Abscheidebereichs des ersten Abscheideelements quer zur Fläche dieses Abscheidebereichs den Abscheidebereich des zweiten Abscheideelements ab oder deckt diesen zumindest im Wesentlichen ab.

In der hier vorgelegten Beschreibung verwendete Relativierungen wie zum Beispiel "parallel oder zumindest im Wesentlichen parallel" sind möglichen Toleranzen bei der Fertigung von Abscheideelementen sowie auch möglichen Toleranzen beim Verbinden jeweils zweier Abscheideelemente miteinander geschuldet. Solche Toleranzen, speziell auch Toleranzen beim Verbinden jeweils zweier Abscheideelemente miteinander, lassen sich niemals ausschließen. Deshalb kann auch zum Beispiel nicht von einer stets exakten Parallelität gesprochen werden, wenngleich im Idealfall durchaus eine exakte Parallelität gegeben ist.

Vorteilhafte Ausgestaltungen der Erfindung sind Gegenstand der weiteren Ansprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in den jeweils vorangehenden Ansprüchen sowie einer allgemeineren Ausführungsform der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Die Verbindungslaschen eines Abscheideelements bestimmen den Abstand zweier mittels dieser verbundener Abscheideelemente. Der Abstand ergibt sich aufgrund einer jeweils wirksamen Länge der Verbindungslaschen.

Die Verbindungslaschen eines Abscheideelements werden zum Verbinden des Abscheideelements mit einem weiteren Abscheideelement zum Beispiel gegen die Fläche des Abscheidebereichs umgeknickt. Eine danach ausgehend von der Ebene des Abscheidebereichs gemessene Dimension einer jeden Verbindungslasche wird als deren Länge angesehen. Eine jeweilige wirksame Länge bestimmt bei zwei mittels der Verbindungslaschen miteinander verbundenen Abscheideelementen deren Abstand, nämlich den Abstand zwischen deren Abscheidebereichen.

Jede Verbindungslasche ist gelenkig mit dem Abscheidebereich verbunden. Dafür weist das Abscheideelement im Bereich eines Übergangs zwischen dem Abscheidebereich und der jeweiligen Lasche eine Knickstelle auf, welche beispielsweise mittels einer Perforation, einer Falz oder einer Kerbe oder Rillung vorgegeben ist. Zur Anpassung einer wirksamen Länge ist bei einer vorteilhaften Ausführungsform des Abscheideelements jede Verbindungslasche in zumindest zwei Abschnitte unterteilt. Die Unterteilung erfolgt vorteilhaft in Form einer (weiteren) Knickstelle, welche wiederum beispielsweise mittels einer Perforation, einer Falz oder einer Kerbe oder Rillung vorgegeben ist. Einer der zumindest zwei Abschnitte (erster Abschnitt) schließt - mit der dortigen Knickstelle - unmittelbar an den Abscheidebereich an. An diesen ersten Abschnitt schließt - insbesondere mit der hier bestehenden weiteren Knickstelle - unmittelbar ein weiterer Abschnitt (zweiter Abschnitt) der zumindest zwei Abschnitte an.

Bei den Knickstellen handelt es sich um linienförmige Knickstellen. Zu jeder Verbindungslasche gehören zumindest zwei linienförmige Knickstellen, nämlich eine linienförmige Knickstelle zwischen dem Abscheidebereich und der Verbindungslasche und zumindest eine weitere linienförmige Knickstelle zwischen den zumindest zwei Abschnitten der Verbindungslasche. Die linienförmigen Knickstellen jeweils einer Verbindungslasche sind zueinander parallel oder zumindest im Wesentlichen parallel.

Jeder von jeweils einer Verbindungslasche umfasste Abschnitt weist einen Einsteckabschnitt auf. Jeder Einsteckabschnitt ist zum Einstecken in einen Einsteckbereich eines weiteren Abscheideelements bestimmt und hergerichtet. Als Einsteckbereiche fungieren zum Beispiel Schlitze im Abscheidebereich. Solche Schlitze sind parallel oder zumindest im Wesentlichen parallel zu den linienförmigen Knickstellen.

Indem jeder Abschnitt der Verbindungslaschen einen Einsteckabschnitt aufweist, indem eine wirksame Länge jeder Verbindungslasche durch Umknicken zumindest eines Abschnitts verkürzt werden kann und indem jeder Einsteckabschnitt in einen Einsteckbereich eines anderen Abscheideelements eingesteckt werden kann, sind auf einfache Art und Weise unterschiedliche Abstände zwischen jeweils zwei mittels der Verbindungslaschen miteinander verbundenen Abscheideelementen möglich. Ein maximaler Abstand ergibt sich, wenn keine der Knickstellen zwischen benachbarten Abschnitten der Verbindungslaschen genutzt wird und entsprechend die aufeinander folgenden Abschnitte der Verbindungslaschen jeweils in gerader Linie oder zumindest im Wesentlichen gerader Linie miteinander fluchten, alle Abschnitte der Verbindungslaschen zusammen deren wirksame Länge bestimmen und die Einsteckabschnitte am Ende der Verbindungslaschen in die Einsteckbereiche des anderen Abscheideelements eingesteckt sind/werden. Ein minimaler Abstand ergibt sich, wenn die Verbindungslaschen entlang der Knickstelle zwischen dem unmittelbar an den Abscheidebereich anschließenden ersten Abschnitt und dem daran anschließenden Abschnitt umgeknickt werden, die ersten Abschnitte der Verbindungslaschen deren wirksame Länge bestimmen und die Einsteckabschnitte am Ende des jeweils ersten Abschnitts der Verbindungslaschen in die Einsteckbereiche des anderen Abscheideelements eingesteckt sind/werden. Zwischen dem maximalen und dem minimalen Abstand sind weitere definierte Abstände möglich, zum Beispiel wenn die Verbindungslaschen mehr als zwei Abschnitte aufweisen, alle Verbindungslaschen eines Abscheideelements an entsprechenden Knickstellen umgeknickt werden und die jeweiligen Einsteckabschnitte in die Einsteckbereiche des anderen Abscheideelements eingesteckt sind/werden.

Bei einer solchen Ausführungsform des Abscheideelements befindet sich bei allen von dem Abscheideelement umfassten Verbindungslaschen zwischen jeweils zwei aufeinander folgenden Abschnitten der Verbindungslaschen eine linienförmige Knickstelle und im Bereich der Knickstelle hat jeweils ein Einsteckabschnitt seinen Ursprung. Beim Umknicken einer Verbindungslasche an der Knickstelle wird der von der Knickstelle ausgehende Einsteckabschnitt zu einem freien Ende der Verbindungslasche und dieser Einsteckabschnitt kann in einen Einsteckbereich eines anderen Abscheideelements eingesteckt werden. Zum Verbinden zweier Abscheideelemente (erstes Abscheideelement, zweites Abscheideelement) miteinander und mittels der Verbindungslaschen werden zum Beispiel alle Verbindungslaschen des ersten Abscheideelements an derselben Stelle umgeknickt - jeweils nach demselben Abschnitt - und die von den jeweils resultierenden Knickstellen ausgehenden Einsteckabschnitte werden freie Enden der Verbindungslaschen und können in jeweils einen Einsteckbereich des zweiten Abscheideelements eingesteckt werden. Dann resultiert ein geringerer Abstand zwischen den beiden Abscheideelementen als ohne ein solches Umknicken.

Die Besonderheit eines Abscheideelements mit Verbindungslaschen mit zumindest zwei Abschnitten besteht darin, dass der Abstand zwischen zwei mittels der Verbindungslaschen miteinander verbundenen Abscheideelementen veränderbar ist. **In** einer Abscheidekombination lassen sich damit Bereiche mit unterschiedlicher Strömungscharakteristik schaffen, zum Beispiel Bereiche, in denen der Rohgasstrom mit hoher Geschwindigkeit strömt, und ebenso Bereiche, in denen der Rohgasstrom mit geringerer Geschwindigkeit strömt. Die jeweilige Strömungscharakteristik bzw. Strömungsgeschwindigkeit ergibt sich damit zwischen den Abscheidebereichen zweier aufeinander folgender Abscheideelemente. Bereiche mit einer ersten Strömungscharakteristik oder geringerer Strömungsgeschwindigkeit ergeben sich aufgrund eines großen oder maximalen Abstands zwischen zwei aufeinander folgenden Abscheideelementen und Bereiche mit einer zweiten Strömungscharakteristik oder höherer Strömungsgeschwindigkeit ergeben sich aufgrund eines geringeren oder minimalen Abstands zwischen zwei aufeinander folgenden Abscheideelementen. Die Möglichkeit, auf einfachem Wege innerhalb einer Abscheidekombination Bereiche mit unterschiedlicher Strömungscharakteristik, insbesondere unterschiedlichen Strömungsgeschwindigkeiten, zu schaffen, verbessert die Eignung der jeweiligen Abscheidekombination zum Abscheiden von mit dem Rohgasstrom mitgeführten Partikeln.

Bei einer vorteilhaften Ausführungsform eines Abscheideelements mit zumindest einer Tür sowie zumindest einem Türeinsteckbereich ist die oder jede Tür zwecks Anpassung einer wirksamen Länge der jeweiligen Tür zumindest in zwei Türabschnitte unterteilt. Die Unterteilung entspricht funktional der bereits erwähnten Unterteilung der Verbindungslaschen. Die Unterteilung der oder jeder Tür eines Abscheideelements in zumindest zwei Türabschnitte ist jedoch grundsätzlich unabhängig von einer tatsächlichen oder ggf. nicht gegebenen Unterteilung der Verbindungslaschen des Abscheideelements in zumindest zwei Abschnitte. Mit anderen Worten: Bei einem Abscheideelement kann die Unterteilung der oder jeder Tür in zumindest zwei Türabschnitte vorgesehen sein, obwohl eine solche Unterteilung bei den Verbindungslaschen des Abscheideelements nicht vorgesehen ist oder umgekehrt, oder es können sowohl die oder jede Tür wie auch die Verbindungslaschen in jeweils zumindest zwei Abschnitte bzw. Türabschnitte unterteilt sein.

Bei einem Abscheideelement mit zumindest einer Tür, wobei die oder jede Tür in zumindest zwei Türabschnitte unterteilt ist, kann die Möglichkeit unterschiedlicher Abstände zwischen jeweils zwei mittels der Verbindungslaschen miteinander verbundener Abscheideelemente auch bei Abscheideelementen mit jeweils zumindest einer Tür genutzt werden.

Für die Türabschnitte gilt das zu den Abschnitten der Verbindungslaschen (Laschenabschnitten) Geschriebene entsprechend und die zumindest in zwei Türabschnitte unterteilte Tür umfasst einen ersten, unmittelbar an den Abscheidebereich angrenzenden Türabschnitt und einen unmittelbar an den ersten Türabschnitt angrenzenden zweiten Türabschnitt und jeder von jeweils einer Tür umfasste Türabschnitt weist einen in einen Türeinsteckbereich eines weiteren Luftstromabscheideelements einsteckbaren Türeinsteckabschnitt auf. Mittels des Einsteckens des Türeinsteckabschnitts in einen Türeinsteckbereich ist eine Tür in geöffnetem Zustand fixiert.

Zumindest ein Abscheideelement mit jeweils zumindest einer Tür kann auch mit zumindest einem Abscheideelement ohne Tür kombiniert werden, nämlich mittels der jeweiligen Verbindungslaschen. Eine dabei entstehende Abscheidekombination umfasst nicht mehr ausschließlich gleiche Abscheideelemente, sondern Gruppen untereinander gleicher Abscheideelemente (Gleichteile). Die geringe Anzahl von Gleichteilen, zum Beispiel genau eine Art von Abscheideelementen (mit oder ohne Tür), genau zwei Arten von Abscheideelementen (mit und ohne Laschen zum Einstellen eines Abstands zwischen zwei aufeinander folgenden Abscheideelementen; ohne Tür und mit Tür), genau drei Arten von Abscheideelementen (ohne Tür sowie mit und ohne Laschen zum Einstellen eines Abstands zwischen zwei aufeinander folgenden Abscheideelementen; mit Tür und mit Laschen ohne Möglichkeit des Einstellens eines Abstands zwischen zwei aufeinander folgenden Abscheideelementen) und genau vier Arten von Abscheideelementen (ohne Tür und mit Tür sowie jeweils mit und ohne Laschen zum Einstellen eines Abstands zwischen zwei aufeinander folgenden Abscheideelementen), und die Anzahl damit möglicher Variationen ist ein großer Vorteil der hier vorgeschlagenen Neuerung.

Bei einer bevorzugten Ausführungsform des Abscheideelements weist dieses einen rechteckigen Abscheidebereich (Luftstromabscheidebereich, Partikelabscheidebereich), insbesondere einen quadratischen Abscheidebereich, auf und das Abschei-deelement ist mittels der Verbindungslaschen mit einem weiteren Abscheideelement in zumindest zwei verschiedenen Orientierungen (bei einem quadratischen Abscheidebereich in vier verschiedenen Orientierungen) verbindbar. Mit anderen Worten: Bei einer bevorzugten Ausführungsform des Abscheideelements ist dieses - einen rechteckigen, insbesondere quadratischen Abscheidebereich aufweisend - mit einem weiteren Abscheideelement in einer ersten Orientierung sowie zumindest einer weiteren Orientierung verbindbar, wobei das Abscheideelement bei einer Anbringung an dem weiteren Abscheideelement in der ersten Orientierung in Relation zu einer Anbringung in der zumindest einen weiteren Orientierung um 180° gedreht ist (bei einem quadratischen Abscheidebereich um ein Vielfaches von 90°).

Zur Verwendung zum Abscheiden von mit einem Rohgasstrom mitgeführten Partikeln ist eine mit zumindest zwei Abscheideelementen der hier und im Folgenden beschriebenen Art gebildete oder zumindest zwei Abscheideelemente der hier und im Folgenden beschriebenen Art umfassende Abscheidekombination bevorzugt in einem Rahmen platziert. Der Rahmen hält die von der Abscheidekombination umfassten Abscheideelemente zusammen und der Rahmen und die in dem Rahmen platzierte Abscheidekombination (die von dem Rahmen aufgenommene Abscheidekombination) bilden zusammen eine Abscheidevorrichtung (Luftstromabscheidevorrichtung) zum Abscheiden von mit einem Rohgasstrom mitgeführten Partikeln. Vorteilhaft kann eine solche Abscheidevorrichtung alleine oder mit zumindest einer weiteren, gleichartigen Abscheidevorrichtung und/oder mit zumindest einer Abscheidevorrichtung der eingangs genannten Art zum Abscheiden von mit einem Rohgasstrom mitgeführten Partikeln verwendet werden.

Der Verwendung einer solchen Abscheidevorrichtung erfolgt bevorzugt in einer Lackieranlage oder im Zusammenhang mit einer Lackieranlage oder dergleichen. Dort sind oder werden in einer Absaugwand oder dergleichen mit einer Mehrzahl von Aufnahmefächern in zumindest einzelnen Aufnahmefächern jeweils zumindest eine Abscheidevorrichtung der hier und im Folgenden beschriebenen Art platziert.

Die mit der Anmeldung eingereichten Ansprüche sind Formulierungsvorschläge ohne Präjudiz für die Erzielung weitergehenden Schutzes. Da speziell die Merkmale der abhängigen Ansprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der jeweils in Bezug genommenen Ansprüche unabhängige Gestaltung aufweisen.

Die hier vorgeschlagene Neuerung ist insgesamt auch die Verwendung eines Abscheideelements wie hier und im Folgenden beschrieben, einer Abscheidevorrichtung wie hier und im Folgenden beschrieben und einer Lackieranlage jeweils zum Abscheiden von mit einem Rohgasstrom mitgeführten Partikeln.

Schließlich ist die hier vorgeschlagene Neuerung auch ein Verfahren zum Abscheiden von mit einem Rohgasstrom mitgeführten Partikeln, insbesondere Farbpartikeln (Farbnebelabscheidung), und nach dem Verfahren wird der Rohgasstrom durch zumindest ein Abscheideelement (Luftstromabscheideelement), zumindest eine Abscheidekombination (Luftstromabscheidekombination) oder zumindest eine Abscheidevorrichtung (Luftstromabscheidevorrichtung) der hier und im Folgenden beschriebenen Art geleitet.

Nachfolgend wird ein vorteilhaftes Ausführungsbeispiel der Erfindung anhand der Zeichnung näher erläutert. Einander entsprechende Gegenstände oder Elemente sind in allen Figuren mit den gleichen Bezugszeichen versehen. Bei mehrfach vorkommendenden Elementen, zum Beispiel Laschen und Schlitzen, sind - mit Blick auf die Übersichtlichkeit der Darstellung - oftmals nicht alle Elemente mit dem jeweiligen Bezugszeichen bezeichnet. Insoweit wird auf die bezeichneten Elemente oder eine eventuelle Bezeichnung desselben Elements in anderen Figuren verwiesen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1: bis
- Fig. 3: ein Abscheideelement mit Mitteln zum lösbaren Verbinden mit einem weiteren gleichartigen Abscheideelement,
- Fig. 4: bis
- Fig. 7: das Abscheideelement gemäß Fig. 1 bis Fig. 3 in einer ersten für den Gebrauch vorbereiteten Konfiguration, nämlich in einer Konfiguration, die bei miteinander verbundenen Abscheideelementen zu einem vergleichsweise großen Abstand führt,
- Fig. 8: bis
- Fig. 11: das Abscheideelement gemäß Fig. 1 bis Fig. 3 in einer zweiten für den Gebrauch vorbereiteten Konfiguration, nämlich in einer Konfiguration, die bei miteinander verbundenen Abscheideelementen zu einem im Vergleich zu der Konfiguration in Fig. 4 bis Fig. 7 kleineren Abstand führt,
- Fig. 12: das Abscheideelement gemäß Fig. 1,
- Fig. 13: und
- Fig. 14: Momentaufnahmen bei Verbinden von Abscheideelementen miteinander,
- Fig. 15: und
- Fig. 16: jeweils eine aufgrund der Situation in Fig. 13 bzw. Fig. 14 resultierende Kombination (Abscheidekombination),
- Fig. 17: eine Momentaufnahme beim Verbinden mehrerer Abscheideelemente miteinander, wobei sich unterschiedliche Abstände ergeben,
- Fig. 18: und
- Fig. 19: die aufgrund der Situation in Fig. 17 resultierende Abscheidekombination in einer isometrischen Ansicht bzw. in einer Seitenansicht,
- Fig. 20, Fig. 21 und Fig. 22: eine spezielle Ausführungsform eines Abscheideelements, insbesondere eines Abscheideelements gemäß Fig. 1 bis 12, nämlich jeweils ein Abscheideelement mit einer Tür,
- Fig. 23: bis
- Fig. 28: das Abscheideelement gemäß Fig. 21, 22 in einer für den Gebrauch vorbereiteten Konfiguration,
- Fig. 29: und
- Fig. 30: eine Mehrzahl von Abscheideelementen gemäß Fig. 21, 22 gestaffelt hintereinander,
- Fig. 31: eine Momentaufnahme beim Verbinden mehrerer Abscheideelemente gemäß Fig. 21, 22 miteinander,
- Fig. 32: und
- Fig. 33: eine Abscheidekombination mit Abscheideelementen gemäß Fig. 21, 22 in einer isometrischen Ansicht bzw. in einer Seitenansicht,
- Fig. 34: eine in einem Rahmen platzierte Abscheidekombination (Abscheidevorrichtung) mit Abscheideelementen gemäß Fig. 1 bis 12 und/oder gemäß Fig. 20 bis 28,
- Fig. 35: ein zum Beispiel als Absaugwand einer Lackieranlage fungierendes Strukturelement mit Fächern zur Aufnahme jeweils einer Abscheidevorrichtung und
- Fig. 36: eine Lackieranlage mit einer Absaugwand.

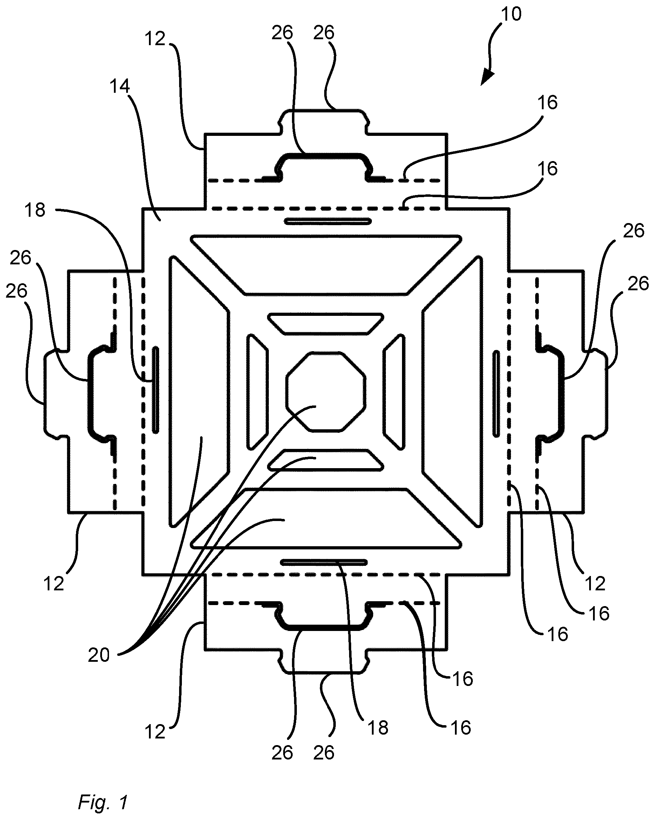

Die Darstellungen in Figur 1 bis Figur 12 zeigen eine Ausführungsform eines Abscheideelements (Luftstromabscheideelement) 10. Als Material kommt zum Beispiel Karton, Pappe (insbesondere Vollpappe oder Wellpappe), Kunststoff, Metall (insbesondere pyrolysebeständiges Metall) oder dergleichen in Betracht.

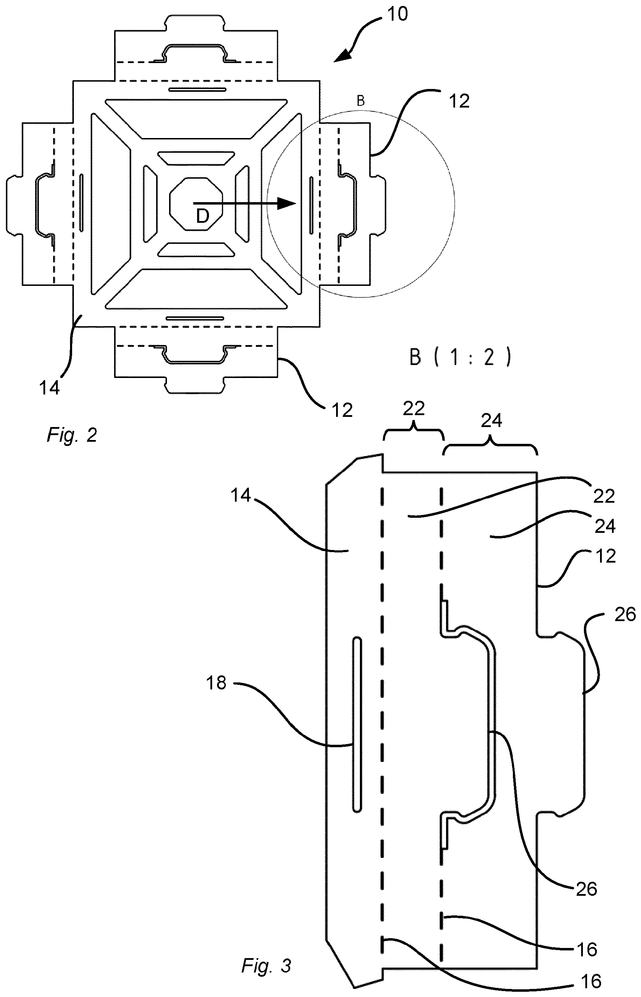

Die Darstellung in Figur 1 zeigt ein Abscheideelement 10 in einer möglichen Transport-/Auslieferungskonfiguration, nämlich in flachem Zustand. Die Darstellung in Figur 2 zeigt das Abscheideelement 10 gemäß Figur 1 mit einem dort hervorgehobenen Bereich und die Darstellung in Figur 3 zeigt den in Figur 2 hervorgehobenen Bereich in einer vergrößerten Ansicht.

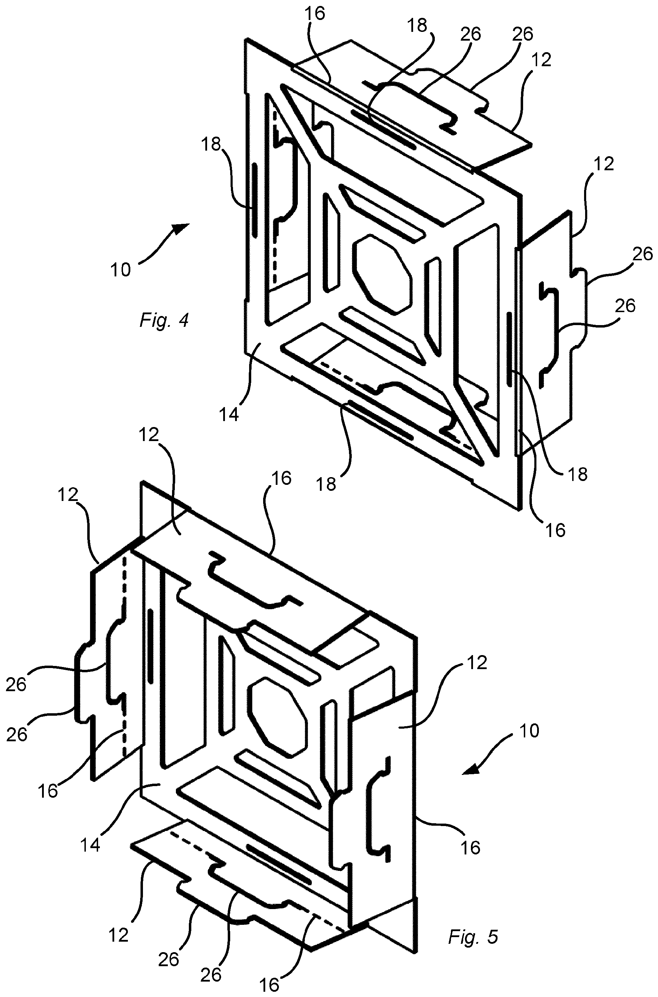

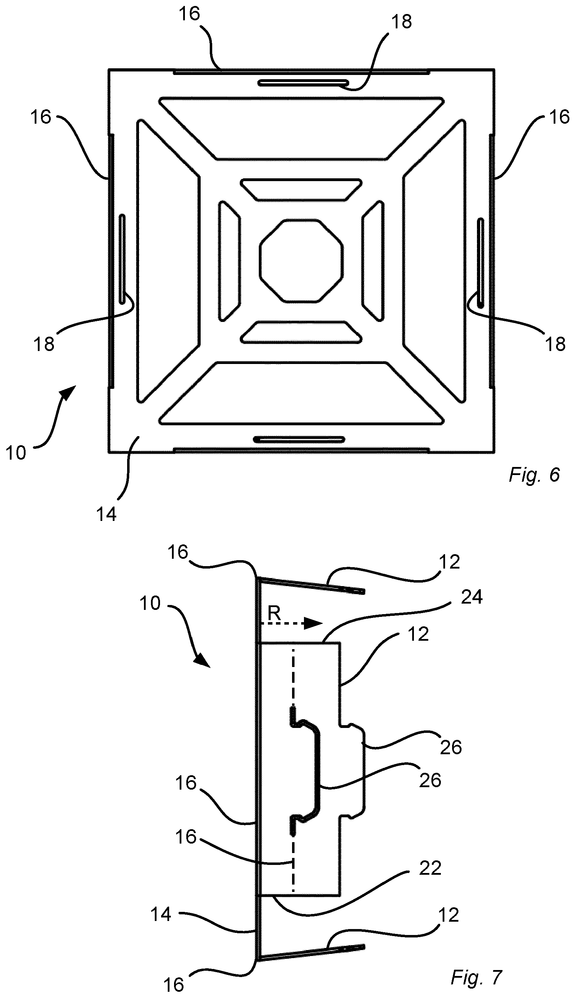

Die Darstellungen in Figur 4 und Figur 5 zeigen das Abscheideelement 10 gemäß Figur 1 in einer für den Gebrauch vorbereiteten Konfiguration, und zwar in einer isometrischen Ansicht sowie im Wesentlichen von vorne bzw. im Wesentlichen von hinten. Die Darstellungen in Figur 6 und Figur 7 zeigen das Abscheideelement 10 in der Konfiguration wie in Figur 4, Figur 5 in einer Frontansicht bzw. in einer Seitenansicht.

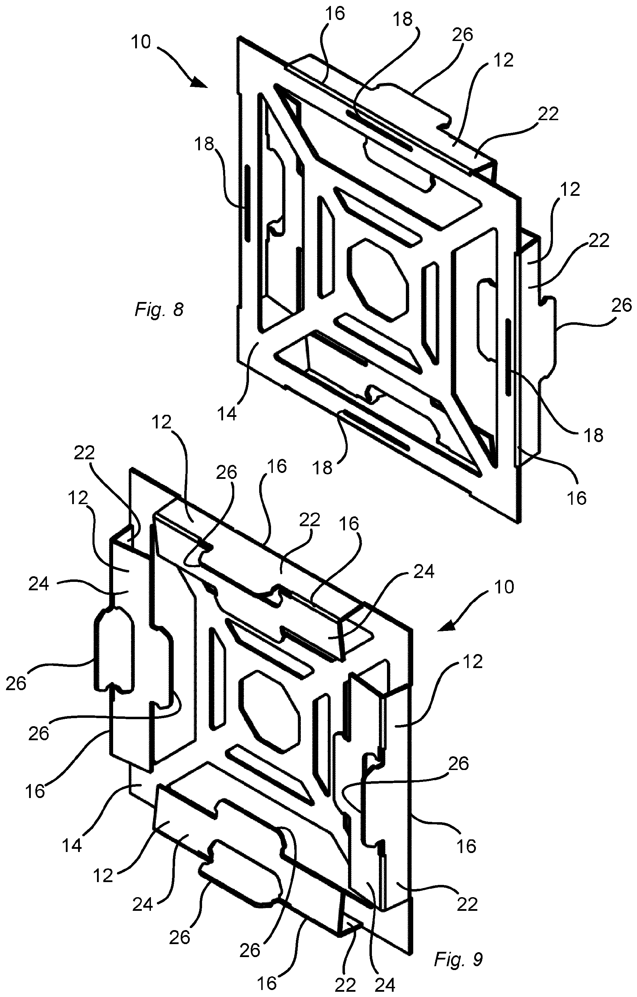

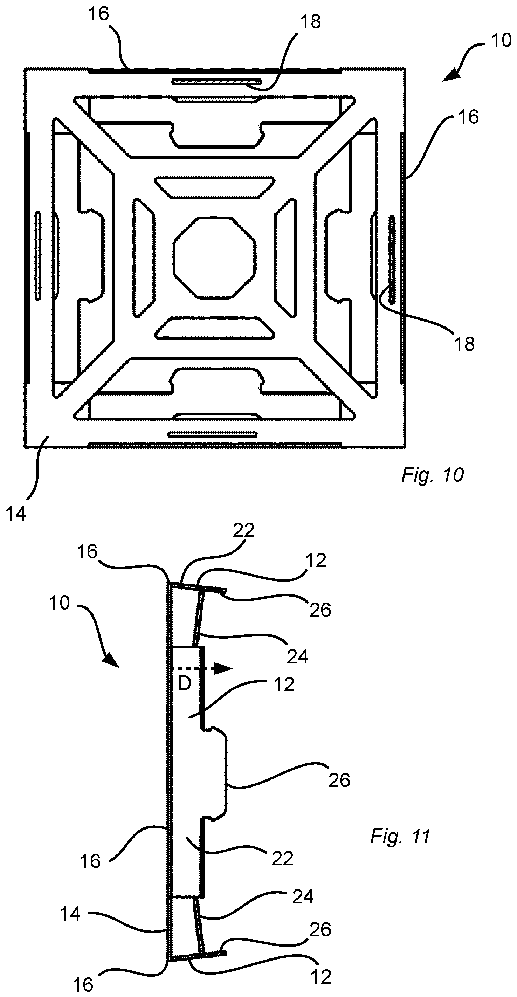

Die Darstellungen in Figur 8 bis Figur 11 zeigen das Abscheideelement 10 gemäß Figur 1 ebenfalls in einer für den Gebrauch vorbereiteten Konfiguration, aber im Vergleich zu den Darstellungen in Figur 4 bis Figur 7 unter Ausnutzung der grundsätzlich optionalen Besonderheit des Abscheideelements 10, nämlich der Unterteilung der Verbindungslaschen 12 in zumindest zwei Abschnitte 22, 24, die auf einfache Art und Weise unterschiedliche Abstände zwischen jeweils zwei mittels der Verbindungslaschen 12 miteinander verbundenen Abscheideelementen 10 möglich macht. Die Darstellungen in Figur 8 und Figur 9 zeigen isometrische Ansichten des Abscheideelements 10 und die Darstellungen in Figur 10 und Figur 11 zeigen das Abschei-deelement 10 in einer Frontansicht bzw. einer Seitenansicht.

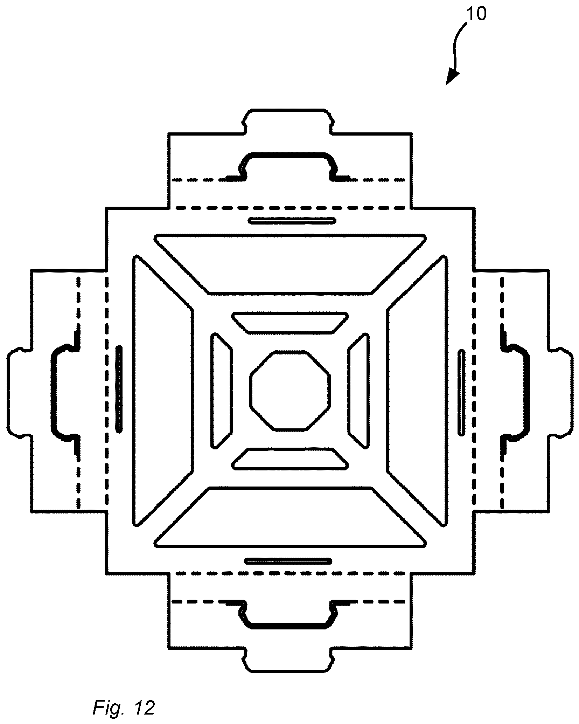

Zur besseren Übersicht über die in Figur 1 gezeigten Verhältnisse wiederholt die Darstellung in Figur 12 die Darstellung aus Figur 1 im Wesentlichen ohne Bezugszeichen.

Ein Abscheideelement 10 weist Mittel zum lösbaren Verbinden (Verbindungsmittel 12) mit einem weiteren Abscheideelement 10, insbesondere genau einem weiteren Abscheideelement 10, auf. Bei der gezeigten Ausführungsform weist ein Abscheideelement 10 als Verbindungsmittel 12 vier an einen zentralen Abscheidebereich 14 anschließende und im Folgenden oftmals kurz nur als Laschen 12 bezeichnete Verbindungslaschen 12 auf. Dies ist lediglich ein Beispiel. Allgemein gilt, dass ein Abscheideelement 10 mehrere (zumindest zwei) Verbindungslaschen 12 aufweist. Ein Abscheideelement 10 kann also zum Beispiel genau vier Verbindungslaschen 12 aufweisen, insbesondere jeweils eine Verbindungslasche 12 anschließend an oder ausgehend von jeweils einer Außenkante des Abscheidebereichs 14, oder zum Beispiel genau zwei Verbindungslaschen 12 aufweisen, insbesondere jeweils eine Verbindungslasche 12 anschließend an oder ausgehend von jeweils gegenüberliegenden Außenkanten des Abscheidebereichs 14. Darüber hinaus kann ein Abschei-deelement 10 anschließend an oder ausgehend von jeweils einer Außenkante des Abscheidebereichs 14 oder jeweils einer Außenkante auch mehr als eine Verbindungslasche 12 aufweisen. Bevorzugt schließt eine jede Lasche 12 mittig an jeweils eine Außenkante des Abscheidebereichs 14 an bzw. geht mittig von jeweils einer Außenkante des Abscheidebereichs 14 aus.

Die weitere Beschreibung wird - ohne Verzicht auf eine weitergehende Allgemeingültigkeit - auf der Basis von Laschen 12 als Mittel zum lösbaren Verbinden (Verbindungsmittel 12) mit einem weiteren Abscheideelement 10, insbesondere genau einem weiteren Abscheideelement 10, sowie auf der Basis von vier entlang einer Umfangslinie des Abscheidebereichs 14 gleichmäßig beabstandeten Laschen 12 fortgesetzt.

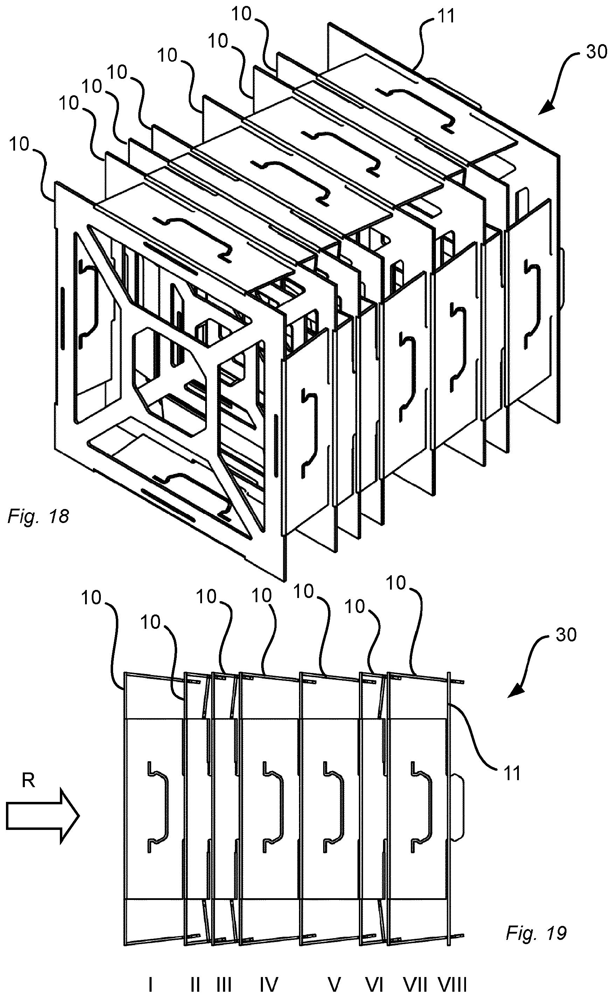

Die Laschen 12 schließen den Abscheidebereich 14 ein. Der Abscheidebereich 14 weist eine Abscheideoberfläche zum Abscheiden von mit einem Rohgasstrom R (Fig. 18) mitgeführten Partikeln auf. Das Abscheideelement 10 umfasst den zentralen Abscheidebereich 14 und die daran anschließenden Laschen 12 bevorzugt - wie bei der gezeigten Ausführungsform - in einer einstückigen Form. Mit anderen Worten: Jede Lasche 12 ist einstückig mit dem Abscheidebereich 14 verbunden (an den Abscheidebereich 14 anschließende Laschen 12). Die weitere Beschreibung wird auch insoweit - ebenfalls ohne Verzicht auf eine weitergehende Allgemeingültigkeit - anhand der beispielhaft gezeigten Ausführungsform fortgesetzt, also anhand eines einstückigen Abscheideelements 10, welches einen zentralen Abscheidebereich 14 und daran anschließende und mit diesem einstückig verbundene Laschen 12 umfasst.

Jede Lasche 12 ist gelenkig mit dem Abscheidebereich 14 verbunden. Zum Erhalt einer Konfiguration wie in Figur 4 bis Figur 7 gezeigt wird/ist jede Lasche 12 gegen die Ebene des Abscheidebereichs 14 umgeknickt. Dafür weist das Abscheideelement 10 im Bereich des Übergangs zwischen dem Abscheidebereich 14 und der jeweiligen Lasche 12 als gelenkige Verbindung eine Markierung, eine Perforation, eine Falz (oder Falzlinie), eine Kerbe (oder Kerblinie) oder Rillung oder dergleichen - im Folgenden zusammenfassend als Knickstelle 16 bezeichnet - auf. Das Umknicken einer jeden Lasche 12 im Bereich der jeweiligen Knickstelle 16 und gegen die Ebene des Abscheidebereichs 14 erfolgt - wie gezeigt - um einen Winkel von etwa 90° (genauer: etwas über 90°, zum Beispiel 100°; siehe Fig. 7).

Mit dem Umknicken der Laschen 12 erhält das zuvor flache Abscheideelement 10 eine Raumform (Fig. 4 bis Fig. 7 oder Fig. 8 bis Fig. 11). Solange die Laschen 12 nicht umgeknickt sind, also bei flachen Abscheideelementen 10, beanspruchen diese nur ein sehr geringes Volumen. Dies ist vor allem beim Transport einer größeren Anzahl von Abscheideelementen 10 an einen jeweiligen Verwendungsort ein großer Vorteil.

Neben den Laschen 12 weist ein Abscheideelement 10 Einsteckbereiche 18 im Abscheidebereich 14 oder am Rand des Abscheidebereichs 14 auf. Ein Abscheideelement 10 weist zumindest eine der Anzahl der Laschen 12 entsprechende Anzahl von Einsteckbereichen 18 auf, ggf. auch mehr, zum Beispiel vier Einsteckbereiche 18 bei zwei einander gegenüberliegenden Laschen 12. Vorteilhaft weist das Abscheideelement 10 - wie bei der gezeigten Ausführungsform - vier entlang einer Umfangslinie des Abscheidebereichs 14 gleichmäßig beabstandete Einsteckbereiche 18 jeweils mittig zu den Außenkanten des Abscheidebereichs 14 und mit den Laschen 12 fluchtend auf.

Bei der beispielhaft gezeigten Ausführungsform fungieren Schlitze 18 im Abscheidebereich 14 als Einsteckbereiche 18. Die Schlitze 18 verlaufen jeweils parallel zu der gelenkigen Verbindung zwischen der nächstliegenden Lasche 12 und dem Abscheidebereich 14, also parallel zu der Knickstelle 16 zwischen der nächstliegenden Lasche 12 und dem Abscheidebereich 14. Die weitere Beschreibung wird auch hier und ebenfalls ohne Verzicht auf eine weitergehende Allgemeingültigkeit anhand der beispielhaft gezeigten Ausführungsform fortgesetzt, nämlich mit genau vier als Einsteckbereich 18 fungierenden Schlitzen 18.

Der Abscheidebereich 14 ist rechteckig, bevorzugt quadratisch. Der Abscheidebereich 14 ist strukturiert und weist im Folgenden zusammenfassend als Löcher 20 bezeichnete Ausstanzungen, Löcher oder dergleichen auf. Die Löcher 20 erlauben bei einer Verwendung des Abscheideelements 10 zum Abscheiden von mit einem Rohgasstrom R (Fig. 18) mitgeführten Partikeln einen Durchtritt des anströmenden Rohgasstroms R. Auf die Art und die Anzahl der Löcher 20 und eine aufgrund der Art und der Anzahl der Löcher 20 resultierende Oberflächenstruktur und/oder ein aufgrund der Art und der Anzahl der Löcher 20 resultierendes Lochmuster kommt es nicht an und entsprechend sind grundsätzlich beliebige Oberflächenstrukturen bzw. Lochmuster möglich und sollen mit diesem Hinweis als von der hier vorgelegten Beschreibung umfasst gelten.

Nun soll eine einzelne Lasche 12 und dort eine bevorzugte, grundsätzlich optionale Ausführungsform betrachtet werden. Dazu sei auf die Darstellung in Figur 3 verwiesen, die in vergrößerter Form den in Figur 2 mit B bezeichneten Bereich zeigt. Für alle anderen Laschen 12 des Abscheideelements 10 gilt das Nachfolgende entsprechend.

Bei der bevorzugten Ausführungsform umfasst jede Lasche 12 zumindest zwei Abschnitte 22, 24, insbesondere zumindest zwei einstückig miteinander verbundene Abschnitte 22, 24. Indem jede Lasche 12 zumindest zwei Abschnitte 22, 24 umfasst, ist jede Lasche 12 in zumindest zwei Abschnitte 22, 24 unterteilt oder kann als in zumindest zwei Abschnitte 22, 24 unterteilt gedacht werden. Dabei handelt es sich um einen ersten, unmittelbar an den Abscheidebereich 14 angrenzenden Abschnitt 22 und einen unmittelbar an den ersten Abschnitt 22 angrenzenden zweiten Abschnitt 24. In der Darstellung in Figur 3 sind die entsprechenden Bezugsziffern einerseits oberhalb von geschweiften Klammern platziert, welche den Bereich der Abschnitte 22, 24 darstellen, und andererseits mit auf den Flächen der Abschnitte 22, 24 endenden Bezugslinien eingetragen. Eine jede Lasche 12 kann mehr als die beispielhaft gezeigten zwei Abschnitte 22, 24 umfassen, kann also zum Beispiel drei, vier oder mehr Abschnitte umfassen.

Zwischen zwei jeweils aneinander angrenzenden Abschnitten 22, 24 befindet sich eine Markierung, eine Perforation, eine Falz (oder Falzlinie), eine Kerbe (oder Kerblinie) oder Rillung oder dergleichen - im Folgenden zusammenfassend als Knickstelle 16 bezeichnet. Die Knickstelle 16 ist zum definierten Umknicken eines Abschnitts (zusammen mit ggf. daran anschließenden weiteren Abschnitten) gegen den in Richtung auf den Abscheidebereich 14 unmittelbar vorangehenden Abschnitt vorgesehen. Bei genau zwei Abschnitten 22, 24 (erster Abschnitt 22; zweiter Abschnitt 24) gibt es entsprechend genau eine Knickstelle 16, nämlich eine Knickstelle 16 zwischen dem ersten Abschnitt 22 und dem zweiten Abschnitt 24, und diese ist zum definierten Umknicken des zweiten Abschnitts 24 gegen den ersten Abschnitt 22 vorgesehen.

Die jeweils zumindest zwei Abschnitte 22, 24 dienen der Anpassung einer wirksamen Länge der jeweiligen Lasche 12 und jede Lasche 12 ist zwecks Anpassung einer wirksamen Länge der jeweiligen Lasche 12 in die zumindest zwei Abschnitte 22, 24 unterteilt.

Die Länge einer Lasche 12 und die Länge eines jeden davon umfassten Abschnitts 22, 24 wird - für den Fall eines noch flachen Abscheideelements 10 - in einer vom Zentrum des Abscheidebereichs 14 ausgehenden Richtung D (siehe Fig. 2) gemessen oder - für den Fall bereits gegen die Ebene des Abscheidebereichs 14 umgeknickter Laschen 12 - in einer von der Ebene des Abscheidebereichs 14 ausgehenden Richtung D (siehe Fig.7, Fig. 11) gemessen. Die Länge einer Lasche 12 insgesamt wird in dieser Richtung ausgehend von der Knickstelle 16 zwischen dem Abscheidebereich 14 und dem ersten Abschnitt 22 gemessen. Die Länge einer Lasche 12 ist also unabhängig davon, ob diese an der Knickstelle 16 zwischen dem Abscheidebereich 14 und dem ersten Abschnitt 22 umgeknickt ist oder nicht.

Es wird bewusst zwischen einer Länge einerseits und einer wirksamen Länge andererseits unterschieden. Die Länge einer Lasche 12 entspricht stets der Summe der Längen der von der Lasche 12 umfassten Abschnitte 22, 24. Die wirksame Länge einer Lasche 12 ist davon abhängig, ob die Lasche 12 an einer Knickstelle 16 zwischen je zwei aneinander angrenzenden Abschnitten 22, 24 umgeknickt ist oder nicht. Die wirksame Länge einer Lasche 12 entspricht stets der Summe der Längen der von der Lasche 12 umfassten Abschnitte 22, 24, die mit dem an den Abscheidebereich 14 angrenzenden Abschnitt 22 (erster Abschnitt 22) fluchten. Wenn die Lasche 12 nicht in Abschnitte 22, 24 unterteilt ist oder wenn alle von der Lasche 12 umfassten Abschnitte 22, 24 mit dem ersten Abschnitt 22 fluchten, sind die Länge der Lasche 12 und die wirksame Länge der Lasche 12 gleich. Die Bezeichnung der wirksamen Länge als wirksam rechtfertigt sich daraus, dass die wirksame Länge der Laschen 12 bei zwei mittels der Laschen 12 miteinander verbundenen Abscheideelementen 10 den Abstand zwischen den jeweiligen Abscheidebereichen 14 bestimmt.

In der in Figur 3 gezeigten Situation hat die Lasche 12 ersichtlich eine wirksame Länge, die der Summe der Längen der beiden Abschnitte 22, 24 entspricht. In der in Figur 4, 5 und Figur 7 gezeigten Situation haben die Laschen 12 ebenfalls eine wirksame Länge, die der Summe der Längen der beiden jeweils umfassten Abschnitte 22, 24 entspricht. In der in Figur 8, 9 und Figur 11 gezeigten Situation haben die Laschen 12 eine wirksame Länge, die der Länge des ersten Abschnitts 22 entspricht. Die wirksame Länge der Laschen 12 ist hier also entsprechend kürzer und hier ist die Anpassung einer wirksamen Länge der Laschen 12 durch Umknicken an der Knickstelle 16 zwischen den beiden Abschnitten 22, 24 erfolgt.

In der Darstellung in Figur 7 in der dort in der Draufsicht gezeigten Lasche 12 sowie in der Darstellung in Figur 3 sind jeweils zwei Abschnitte 22, 24 erkennbar. In der Darstellung in Figur 7 sind von den dort in der Seitenansicht gezeigten Laschen 12 ebenfalls beide Abschnitte erkennbar. Dort ist jedoch aufgrund der Ansicht die Knickstelle 16 zwischen den beiden Abschnitten 22, 24 nicht sichtbar.

In der Darstellung in Figur 11 ist von der dort in der Draufsicht gezeigten Lasche 12 nur der unmittelbar an den Abscheidebereich 14 anschließende Abschnitt 22 erkennbar. Von den in Figur 11 in der Seitenansicht gezeigten Laschen 12 sind beide Abschnitte 22, 24 erkennbar, wobei der unmittelbar an den Abscheidebereich 14 anschließende Abschnitt 22 (erster Abschnitt 22) gegen den Abscheidebereich 14 umgeknickt ist und der unmittelbar an den ersten Abschnitt 22 anschließende Abschnitt 24 gegen den ersten Abschnitt 22 umgeknickt ist. Für die in der Draufsicht gezeigte Lasche 12 und die in der Darstellung in Figur 11 überhaupt nicht sichtbare Lasche 12 gilt dies (gegen den ersten Abschnitt 22 umgeknickter zweiter Abschnitt 24) entsprechend.

Die Unterteilung der Laschen 12 in jeweils zumindest zwei Abschnitte 22, 24 erlaubt eine Anpassung von deren wirksamer Länge. Zum Zwecke einer Verbindung eines Abscheideelements 10 mit einem weiteren Abscheideelement 10 mittels der Laschen 12 weist jeder von jeweils einer Lasche 12 umfasste Abschnitt 22, 24 einen Einsteckabschnitt 26 auf, nämlich einen in einen Schlitz 18 im weiteren Abscheideelement 10 einsteckbaren Einsteckabschnitt 26. Jede Lasche 12 weist am Ende einer jeweiligen Lasche 12 einen Einsteckabschnitt 26 auf. Bei einer Lasche 12 mit genau zwei Abschnitten 22, 24 (erster oder innerer Abschnitt 22, angrenzend an den Abscheidebereich 14; zweiter oder äußerer Abschnitt 24, angrenzend an den inneren Abschnitt 22) weist die Lasche 12 den Einsteckabschnitt 26 also am Ende des zweiten Abschnitts 24 auf. Dieser Einsteckabschnitt 26 wird beim Verbinden mit einem weiteren Abscheideelement 10 verwendet, wenn ein großer Abstand zwischen den Abscheideelementen 10 gewünscht ist.

Weil jede Lasche 12 an jedem davon umfassten Abschnitt 22, 24 einen Einsteckabschnitt 26 aufweist (bevorzugt jeweils mittig), wird nach dem Umknicken eines Abschnitts der Lasche 12 gegen den diesem Abschnitt unmittelbar vorangehenden Abschnitt der Einsteckabschnitt 26 dieses unmittelbar vorangehenden Abschnitts frei und ist beim Verbinden mit einem weiteren Abscheideelement 10 verwendbar. Bei einer Lasche 12 mit genau zwei Abschnitten 22, 24 (erster oder innerer Abschnitt 22, angrenzend an den Abscheidebereich 14; zweiter oder äußerer Abschnitt 24, angrenzend an den inneren Abschnitt 22) wird nach dem Umknicken des äußeren Abschnitts 24 gegen den inneren Abschnitt 22 der Einsteckabschnitt 26 des inneren Abschnitts 22 frei (ist aus der Fläche des äußeren Abschnitts 24 herausgelöst) und ist zum Verbinden mit einem weiteren Abscheideelement 10 verwendbar. Jetzt ist die wirksame Länge der Lasche 12 auf die Länge des ersten, inneren Abschnitts 22 reduziert und die Verbindung mit dem weiteren Abscheideelement 10 erfolgt mit einem geringeren Abstand.

Die Einsteckabschnitte 26 sind passend zu den als Einsteckbereichen 18 fungierenden Schlitzen 18 ausgeführt, derart, dass ein Einstecken, insbesondere formschlüssiges Einstecken eines Einsteckabschnitts 26 in den Einsteckbereich/Schlitz 18, nämlich den Einsteckbereich/Schlitz 18 eines anderen Abscheideelements 10, möglich ist. Optional sind die Einsteckabschnitte 26 - wie gezeigt - abschnittsweise leicht übermassig gegenüber der Länge eines Schlitzes 18, sodass aufgrund des Überma-ßes zum Beispiel resultierende Nasen oder dergleichen seitlich am Einsteckabschnitt 26 im in einen Schlitz 18 eingesteckten Zustand den Einsteckabschnitt 26 im Schlitz 18 und damit an einem anderen Abscheideelement 10 fixieren.

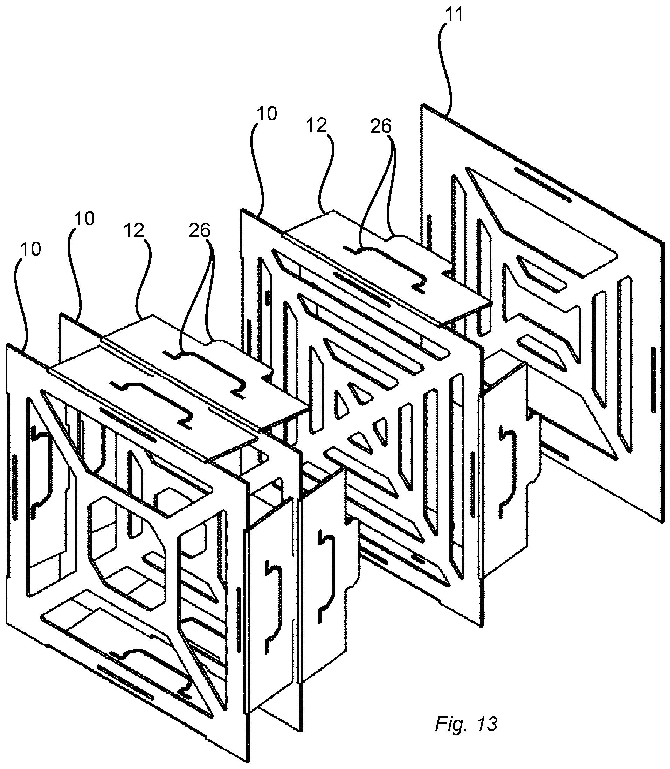

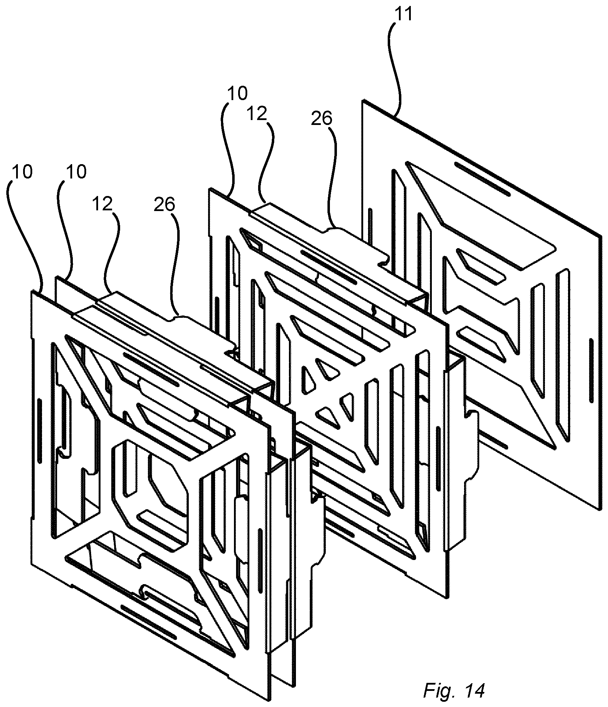

Die Darstellungen in Figur 13 und Figur 14 zeigen beispielhafte Momentaufnahmen bei Verbinden von Abscheideelementen 10 miteinander. Gezeigt sind jeweils drei Abscheideelemente 10. Die jeweils ganz links gezeigten Abscheideelemente 10 sind bereits mittels der Laschen 12 miteinander verbunden und die beiden bereits miteinander verbundenen Abscheideelemente 10 können sodann - mittels der noch freien Laschen 12 der bereits miteinander verbundenen Abscheideelemente 10 - mit dem weiteren Abscheideelement 10 verbunden werden. Mit den dann noch freien Laschen 12 kann ein weiteres Abscheideelement 10 verbunden werden (und dies lässt sich grundsätzlich beliebig fortsetzen) oder ein spezielles Abschlussabscheideelement 11 (ein Abscheideelement ohne Laschen 12) verbunden werden. Eine Reihenfolge der Verbindung mehrerer Abscheideelemente 10 miteinander ist beliebig. Bei einer größeren Anzahl von Abscheideelementen 10 gilt dies und für dabei entstehende Gruppen von zwei oder mehr jeweils miteinander verbundenen Abscheideelementen 10 entsprechend.

Die Darstellung in Figur 13 zeigt eine Situation, bei der diese Verbindung mit einem vergleichsweise großen Abstand zwischen den Abscheidebereichen 14 der einzelnen Abscheideelemente 10 erfolgt. Die Darstellung in Figur 14 zeigt eine Situation, bei der diese Verbindung mit einem im Vergleich zu der Situation in Figur 13 kleineren Abstand zwischen den Abscheidebereichen 14 der einzelnen Abscheideelemente 10 erfolgt. Diese Abstände ergeben sich jeweils aufgrund der wirksamen Länge der Laschen 12. Bei der Situation in Figur 13 ergibt sich die wirksame Länge der Laschen 12 aufgrund der Länge der zumindest zwei von den Laschen 12 umfassten Abschnitte 22, 24. Bei der Situation in Figur 14 ergibt sich die wirksame Länge der Laschen 12 aufgrund der Länge des unmittelbar an den Abscheidebereich 14 anschließenden Abschnitts 22 der Laschen 12.

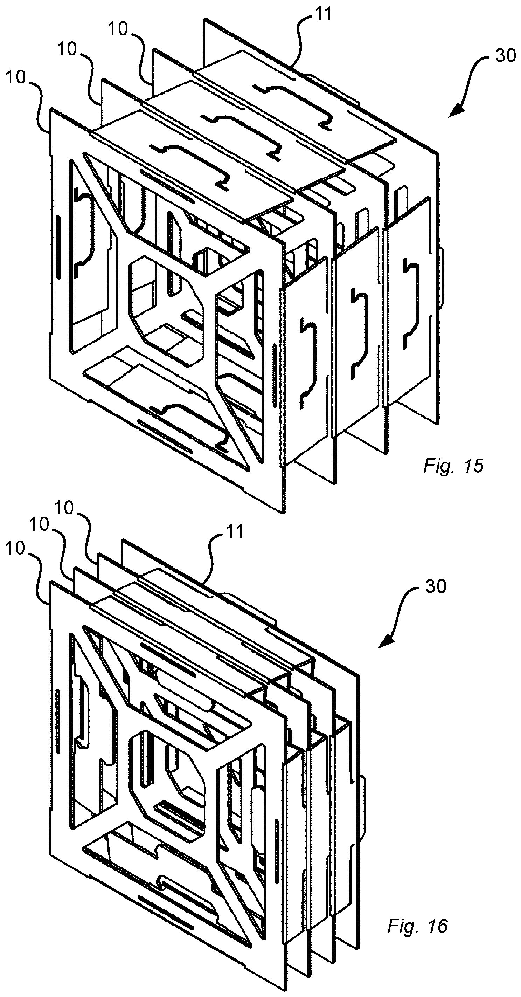

Die Darstellungen in Figur 15 und Figur 16 zeigen jeweils eine aufgrund der Situation in Figur 13 bzw. Figur 14 resultierende Kombination. Eine solche Kombination, nämlich eine zumindest zwei wie hier und im Folgenden miteinander verbundene Abscheideelemente 10 umfassende Kombination, ist eine Abscheidekombination 30 und wird im Folgenden als Abscheidekombination 30 bezeichnet. Eine Abscheidekombination 30 umfasst eine Mehrzahl (zumindest zwei) von miteinander verbundenen und im verbundenen Zustand gestaffelt hintereinander angeordneten Abscheideelementen 10.

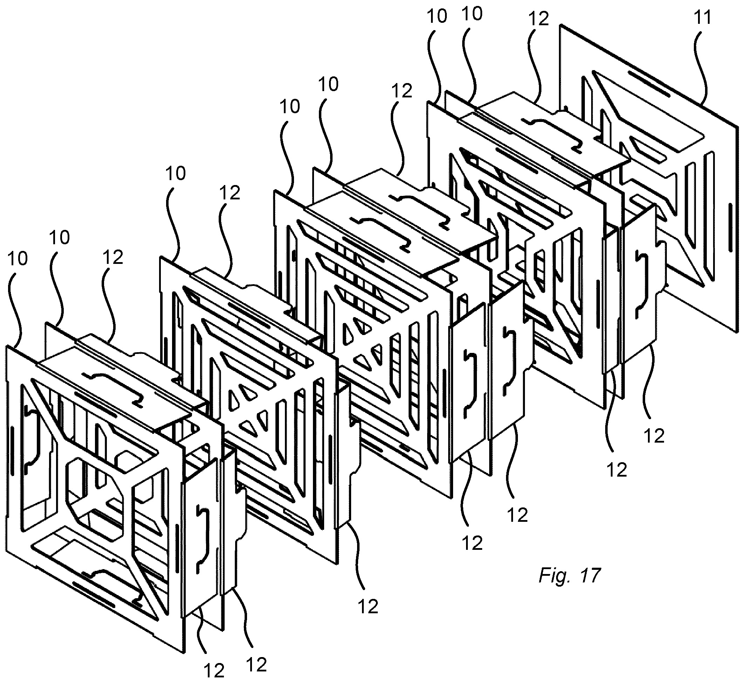

Die Darstellung in Figur 17 zeigt eine beispielhafte Momentaufnahme beim Verbinden mehrerer Abscheideelemente 10 miteinander, wobei unterschiedliche wirksame Längen der Laschen 12 zur Anwendung kommen. Die Darstellungen in Figur 18 und Figur 19 zeigen die aufgrund der Situation in Figur 17 resultierende Abscheidekombination 30 in einer isometrischen Ansicht bzw. in einer Seitenansicht. Dort sind die aufgrund unterschiedlicher wirksamer Längen der Laschen 12 resultierenden unterschiedlichen Abstände zwischen den Abscheidebereichen 14 der Abscheideelemente 10 gut erkennbar.

In der Darstellung in Figur 19 ist mit dem in Richtung auf die Abscheidekombination 30 weisenden Blockpfeil auch die Richtung eines Rohgasstroms R gezeigt, der bei Verwendung der Abscheidekombination 30 diese anströmt und durch die Abscheidebereiche 14 der davon umfassten Abscheideelemente 10 hindurchtritt, also die einzelnen Abscheidebereiche 14 durchströmt. Beim Durchströmen findet das Abscheiden von mit dem Rohgasstrom mitgeführten Partikeln, insbesondere Farbpartikeln, an der Oberfläche der Abscheidebereiche 14 und den Randlinien und/oder Randflächen der Löcher 20 in den Abscheidebereichen 14 statt.

In der Darstellung in Figur 19 sind den Abscheideelementen 10 zur Erleichterung der Bezugnahme römische Ziffern zugeordnet. Das erste Abscheideelement 10 - römisch I - ist das ganz links gezeigte Abscheideelement 10. Dieses wird zuerst vom anströmenden Rohgasstrom R getroffen. Das zweite Abscheideelement 10 - römisch II - befindet sich in Bezug auf den Strömungsweg des Rohgasstroms R stromabwärts des ersten Abscheideelements 10 (hinter dem ersten Abscheideelement 10) und ist mittels der Laschen 12 mit dem ersten Abscheideelement 10 verbunden. Das dritte Abscheideelement 10 - römisch III - befindet sich in Bezug auf den Strömungsweg des Rohgasstroms R stromabwärts des zweiten Abscheideelements 10 (hinter dem zweiten Abscheideelement 10) und ist mit dem zweiten Abscheideelement 10 verbunden und so weiter. Das Abschlussabscheideelement 11, das wie ein Abschei-deelement 10 fungiert und mit einem Abscheideelement 10 verbunden ist, nämlich mit dem mit römisch VII bezeichneten Abscheideelement 10, ist zumindest in Bezug auf die Abscheidung von mit dem Rohgasstrom R mitgeführten Partikeln wie eines der anderen Abscheideelemente 10 anzusehen.

Die von einer Abscheidekombination 30 umfassten Abscheideelemente 10 sind miteinander verbunden, indem jeweils die Einsteckabschnitte 26 der Laschen 12 eines Abscheideelements 10 in die Schlitze 18 eines anderen, entlang der Staffelung nachfolgenden (nachfolgend im Sinne der Abfolge hintereinander sowie wie weiter unten beschrieben) Abscheideelements 10 eingesteckt sind. In ein vorderes, erstes Abscheideelement 10 einer Abscheidekombination 30 sind in dessen Schlitze 18 keine Laschen 12 eines anderen Abscheideelements 10 eingesteckt. Ein hinteres, letztes Abscheideelement 10 einer Abscheidekombination 30 weist entweder keine Laschen 12 auf (es handelt sich dann um ein Abscheideelement 10 in Form eines Abschlussabscheideelements 11) oder dessen Laschen 12 sind frei, also nicht in die Schlitze 18 eines anderen Abscheideelements 10 eingesteckt. Bei dem oder jedem ggf. zwischen dem ersten und dem letzten Abscheideelement 10 befindlichen Abschei-deelement 10 sind in dessen Schlitze 18 die Einsteckabschnitte 26 der Laschen 12 eines anderen (vorangehenden) Abscheideelements 10 eingesteckt und dessen Einsteckabschnitte 26 sind in die Schlitze 18 eines anderen (nachfolgenden) Abscheideelements 10 eingesteckt.

Von einem ersten oder vorderen Abscheideelement 10 sowie einem letzten oder hinteren Abscheideelement 10 sowie insgesamt von vorangehenden und nachfolgenden Abscheideelementen 10 zu sprechen, rechtfertigt sich vor dem Hintergrund der späteren Verwendung der Abscheidekombination 30: Die Abscheidekombination 30 wird bei bestimmungsgemäßer Verwendung, zum Beispiel bei einer Verwendung in einer Lackieranlage, von einem mit Partikeln beladenen Rohgasstrom R angeströmt und der Rohgasstrom R strömt durch die Abscheidekombination 30 hindurch, nämlich durch die Löcher 20 in den Abscheidebereichen 14 der einzelnen Abscheideelemente 10. Das erste oder vordere Abscheideelement 10 (Abscheideelement I) ist dasjenige Abscheideelement 10, auf welches der Rohgasstrom R dabei zunächst trifft. Das letzte oder hintere Abscheideelement 10 (oder Abschlussabscheideelement 11; Abscheideelement VII) ist dabei entsprechend dasjenige Abscheideelement 10, 11, auf welches der Rohgasstrom R zuletzt trifft, durch dessen Löcher 20 der Rohgasstrom R zuletzt hindurchströmt. Ein Abscheideelement 10, welches einem anderen Abscheideelement 10 vorangeht, befindet sich in Richtung des Rohgasstroms R stromaufwärts dieses Abscheideelements 10. Entsprechend befindet sich ein einem anderen Abscheideelement 10 nachfolgendes Abscheideelement 10 in Richtung des Rohgasstroms R stromabwärts dieses Abscheideelements 10.

Weil eine Abscheidekombination 30 definitionsgemäß eine Mehrzahl (zumindest zwei) von mittels der Laschen 12 (mittels der Einsteckabschnitte 26 der Laschen 12 und der Schlitze 18 der Abscheidebereiche 14) miteinander verbundenen Abscheideelementen 10 umfasst, bilden zum Beispiel auch die ersten zwei Abscheideelemente 10 (Abscheideelemente **I,** II) oder die ersten drei Abscheideelemente 10 (Abscheideelemente **I, II,** III) eine Abscheidekombination 30. Allgemein sind im Falle miteinander verbundener Abscheideelemente 10 alle von dem Verbund umfassten Abscheideelemente 10 eine Abscheidekombination 30, aber auch innerhalb einer solchen Abscheidekombination 30 ist jede Gruppe von zumindest zwei miteinander verbundenen Abscheideelementen 10 (Abscheideelementegruppe) eine Abscheidekombination 30. In der Darstellung in Figur 19 sind entsprechend also auch das zweite und dritte Abscheideelement 10 (Abscheideelemente **II,** III), das zweite, dritte und vierte Abscheideelement 10 (Abscheideelemente **II, III,** IV), das dritte und vierte Abscheideelement 10 (Abscheideelemente **III,** IV) usw. jeweils zusammen jeweils eine Abscheidekombination 30 oder eine Abscheideelementegruppe. Für andere Konfigurationen als in Figur 19 dargestellt, also im Falle von mehr oder weniger Abscheideelementen 10, gilt dies entsprechend.

Auf der in der Darstellung in Figur 19 linken Seite entstehen, zum Beispiel aufgrund eines Betriebs einer Lackieranlage oder dergleichen, mittels der Abscheideelemente 10 abzuscheidende Partikel, insbesondere Farbpartikel. Auf der in der Darstellung linken Seite ist entsprechend der Rohgasstrom R mit solchen Partikeln beladen (der Rohgasstrom R führt solche Partikel mit sich; die dortige Seite ist die sogenannte Staubluftseite). Auf der in der Darstellung rechten Seite ist die Menge der von dem Rohgasstrom R mitgeführten Partikel deutlich reduziert (die dortige Seite ist die sogenannte Reinluftseite), weil zumindest ein Teil der von dem Rohgasstrom R mitgeführten Partikel - üblicherweise ein Großteil der mitgeführten Partikel - an den Abscheideelementen 10 abgeschieden wurde.

Aufgrund unterschiedlicher Abstände zwischen den Abscheidebereichen 14 der von einer Abscheidekombination 30 umfassten Abscheideelemente 10 entstehen beim Durchströmen mit einem Rohgasstrom R Bereiche mit unterschiedlichen Strömungsgeschwindigkeiten. Beim Auftreffen des Rohgasstroms R auf einen Abscheidebereich 14 und dort auf die Materialabschnitte zwischen den Löchern 20 kommt es zu einer Umlenkung des Rohgasstroms R und einer Wirbelbildung. Die resultierenden Wirbel können sich zwischen jeweils zwei aufeinander folgenden Abscheidebereichen 14 ausbilden. Bei größeren Abständen zwischen zwei aufeinander folgenden Abscheidebereichen 14 fällt die Wirbelbildung und damit auch die Strömungsgeschwindigkeit des Rohgasstroms R in diesem Bereich anders aus als bei geringeren Abständen zwischen zwei aufeinanderfolgenden Abscheidebereichen 14. Auch wenn dies messtechnisch zum Zeitpunkt der Abfassung der hier vorgelegten Beschreibung noch nicht abschließend verifiziert wurde, wird davon ausgegangen, dass in einem Bereich größerer Abstände zwischen zwei aufeinander folgenden Abscheidebereichen 14 eine geringere Strömungsgeschwindigkeit des Rohgasstroms R herrscht als in einem Bereich geringerer Abstände zwischen zwei aufeinander folgenden Abscheidebereichen 14. Mittels der zwecks Anpassung einer wirksamen Länge zumindest in zwei Abschnitte unterteilten Laschen 12 wird genau diese je nach jeweiligem Abstand unterschiedliche Wirbelbildung und/oder Strömungsgeschwindigkeit bezweckt und erreicht.

Die Darstellungen in Figur 13 und Figur 14 sowie die auf der in Figur 13 und Figur 14 jeweils gezeigten Situation basierenden weiteren Figuren zeigen eine vorteilhafte, aber gleichwohl optionale Ausführungsform mit Abscheideelementen 10 mit unterschiedlichen Lochmustern, nämlich Abscheideelemente 10 mit Abscheidebereichen 14 mit jeweils unterschiedlichen Lochmustern. Ein jeweiliges Lochmuster ist zum Beispiel durch die Anzahl und die Größe der Löcher 20 im Abscheidebereich 14 bestimmt. Bei den gezeigten Situationen nimmt die Anzahl der Löcher 20 entlang der im miteinander verbundenen Zustand gestaffelt hintereinander angeordneten Abscheideelemente 10 zu (progressive Zunahme). Optional nimmt in gleicher Richtung auch die Größe der Löcher 20 ab. Mit einer in diesem Sinne zumindest zunehmenden Lochanzahl ergibt sich eine Abscheidekombination 30 mit einem progressiven Aufbau.

In den Darstellungen in Figur 13 bis Figur 19 sind im Interesse des Erhalts der Übersicht über die Darstellungen nur wenige Bezugsziffern eingetragen. Es wird insoweit auf die Figuren 1 bis 11 verwiesen.

Bevorzugt umfassen alle Laschen 12 eines Abscheideelements 10 dieselbe Anzahl von Abschnitten 22, 24. Optional sind die jeweils miteinander korrespondierenden Abschnitte 22, 24 der Laschen 12 gleich groß, zumindest gleich lang. In einem solchen Fall sind bei Laschen 12 mit genau zwei Abschnitten 22, 24 (erster Abschnitt 22; zweiter Abschnitt 24) also alle ersten Abschnitte 22 jeweils gleich lang und ebenso alle zweiten Abschnitte 24 jeweils gleich lang.

Alternativ sind die jeweils miteinander korrespondierenden Abschnitte 22, 24 von einander am Abscheidebereich 14 gegenüberliegenden Laschen 12 jeweils gleich groß, zumindest gleich lang, so dass sich jeweils paarweise gleich große, zumindest gleich lange Abschnitte 22, 24 ergeben. Hier sind auch Laschen 12 mit einer unterschiedlichen Anzahl von Abschnitten 22, 24 möglich, zum Beispiel ein Paar Laschen 12 mit zwei Abschnitten 22, 24 und ein weiteres Paar Laschen 12 mit mehr als zwei Abschnitten 22, 24 oder allgemein ein Paar Laschen 12 mit einer ersten Anzahl von Abschnitten 22, 24 (zumindest einer) und ein weiteres Paar Laschen 12 mit einer zweiten Anzahl von Abschnitten 22, 24 (zumindest einer), wobei die erste Anzahl und die zweite Anzahl unterschiedlich sind. Zusätzlich oder alternativ ist anstelle jeweils gleich langer Abschnitte 22, 24 auch eine andere Unterteilung einer einzelnen Lasche 12 möglich. Bei einer Lasche 12 mit genau zwei Abschnitten 22, 24 kann auch eine Unterteilung der Lasche 12 in ungleich lange Abschnitte 22, 24 vorgesehen sein, zum Beispiel derart, dass sich die Gesamtlänge der Lasche 12 zu einem Drittel auf einen der Abschnitte 22, 24 und zu zwei Dritteln auf den anderen Abschnitt 24, 22 aufteilt. Für andere Bruchteile (zum Beispiel 1/4 zu 3/4; 2/5 zu 3/5 usw.) gilt dies entsprechend. Des Weiteren gilt all dies auch im Falle von Laschen 12 mit mehr als zwei Abschnitten 22, 24 entsprechend. Bei dieser Alternative ergeben sich noch weitergehende Möglichkeiten für unterschiedliche Abstände zwischen mittels der Laschen 12 miteinander verbundenen Abscheideelementen 10. Bei jeweils paarweise gleich langen Laschen 12 kommt in Betracht, dass die beim Verbinden eines Abscheideelements 10 mit einem weiteren Abscheideelement 10 nicht benutzten Laschen 12 abgerissen oder abgeschnitten werden, zum Beispiel entlang einer der Knickstellen 16, insbesondere entlang der Knickstelle 16 mit dem Abscheidebereich 14.

Mittels der Laschen 12 lässt sich ein Abscheideelement 10 (erstes Abscheideelement 10) mit einem weiteren Abscheideelement 10 (zweites Abscheideelement 10) auf besonders einfache und schnelle Art und Weise lösbar verbinden. Mit anderen Worten: Mittels der Laschen 12 ist ein erstes Abscheideelement 10 mit einem zweiten Abscheideelement 10 lösbar verbindbar; mittels der Laschen 12 wird ein erstes Abscheideelement 10 mit einem zweiten Abscheideelement 10 lösbar verbunden. Dafür werden jeweils die Einsteckabschnitte 26 desselben Abschnitts 22, 24 der Laschen 12 des ersten Abscheideelements 10 in die Schlitze 18 des zweiten Abscheideelements 10 eingesteckt (je ein Einsteckabschnitt 26 in jeweils einen Schlitz 18). Eine jeweilige wirksame Länge der Laschen 12 bestimmt dabei den Abstand zwischen den beiden so miteinander verbundenen Abscheideelementen 10. Genauer: Die wirksame Länge der Laschen 12 bestimmt den Abstand zwischen den Abscheidebereichen 14 der beiden miteinander verbundenen Abscheideelemente 10. In einer solchen miteinander verbundenen Konfiguration sind die Abscheidebereiche 14 der beiden Abscheideelemente 10 parallel oder zumindest im Wesentlichen parallel zueinander. Eine Lasche 12 fungiert demnach auch als Mittel zu Gewährleistung eines definierten Abstands (Abstandsmittel) zwischen zwei Abscheideelementen 10 und deren Abscheidebereichen 14. Eine einzelne Lasche 12 und die Gesamtheit der Laschen 12 eines Abscheideelements 10 ist demnach ein Abstands- und Verbindungsmittel 12 (Abstandsverbindungsmittel) oder eine Abstands- und Verbindungsvorrichtung (Abstandsverbindungsvorrichtung).

Ebenso wie - wie beschrieben - zwei Abscheideelemente 10 miteinander verbindbar sind, können einer solchen Kombination weitere Abscheideelemente 10 hinzugefügt werden. Dafür werden jeweils die Einsteckabschnitte 26 der Laschen 12 in entsprechende Schlitze 18 eingesteckt.

Ein Verbinden von Abscheideelementen 10 miteinander und mittels der Laschen 12 ist problemlos erst an einem jeweiligen Verwendungsort möglich und das Verbinden von Abscheideelementen 10 miteinander ist so einfach, dass das Verbinden auch durch ungeschultes Personal erfolgen kann. Zum Erhalt einer bestimmungsgemäßen Abfolge von Abscheideelementen 10 (zum Beispiel bei Abscheideelementen 10 mit unterschiedlichen Lochmustern) sind diese bevorzugt mit einer eindeutigen Markierung versehen, zum Beispiel im Bereich der Laschen 12 nummeriert und/oder mit einem Farbcode versehen.

Jeder Einsteckabschnitt 26 einer einzelnen Lasche 12 eines Abscheideelements 10 kann grundsätzlich in jeden Schlitz 18 eines anderen Abscheideelements 10 eingesteckt werden. Zum Verbinden eines Abscheideelements 10 mit einem weiteren Abscheideelement 10 mittels der Laschen 12, nämlich der jeweils zumindest zwei Abschnitte 22, 24 und entsprechend jeweils zumindest zwei Einsteckabschnitte 26 umfassenden Laschen 12, werden die jeweils miteinander korrespondierenden Einsteckabschnitte 26 in die Schlitze 18 des anderen Abscheideelements 10 eingesteckt. In diesem Sinne miteinander korrespondierende Einsteckabschnitte 26 sind bei Laschen 12 mit genau zwei Abschnitten 22, 24 (erster Abschnitt 22; zweiter Abschnitt 24) einerseits die Einsteckabschnitte 26 am ersten Abschnitt 22 und andererseits die Einsteckabschnitte 26 am zweiten Abschnitt 24. Für Laschen 12 mit mehr als zwei Abschnitten gilt dies entsprechend.

Beim Einstecken aller korrespondierenden Einsteckabschnitte 26 eines Abscheideelements (erstes Abscheideelement) 10 in jeweils einen Schlitz 18 eines anderen Abscheideelements (zweites Abscheideelement) 10 gibt es bei Abscheideelementen 10 mit rechteckigen Abscheidebereichen 14 zumindest zwei Möglichkeiten zum Verbinden des ersten Abscheideelements 10 mit dem zweiten Abscheideelement 10 und bei Abscheideelementen 10 mit quadratischen Abscheidebereichen 14 vier (genau vier) Möglichkeiten zum Verbinden des ersten Abscheideelements 10 mit dem zweiten Abscheideelement 10. Diese zumindest zwei bzw. vier Verbindungsmöglichkeiten ergeben sich aufgrund einer möglichen Drehung der beiden Abscheideelemente 10 relativ zueinander. Bei Abscheideelementen 10 mit quadratischen Abscheidebereichen 14 kann das erste Abscheideelement 10 mit einer Drehung in Schritten von 90° mit dem zweiten Abscheideelement 10 verbunden werden, so dass sich als mögliche Orientierungen des ersten Abscheideelements 10 Orientierungen von 0°, 90°, 180°, 270° und 360° (= 0°) - also vier verschiedene mögliche Orientierungen - ergeben. Bei Abscheideelementen 10 mit lediglich rechteckigen Abscheidebereichen 14 (unter Ausschluss der quadratischen Sonderform) kann das erste Abscheideelement 10 mit einer Drehung in Schritten von 180° mit dem zweiten Abscheideelement 10 verbunden werden, so dass sich als mögliche Orientierungen des ersten Abscheideelements 10 Orientierungen von 0°, 180° und 360° (= 0°) - also zwei verschiedene mögliche Orientierungen - ergeben.

Diese Möglichkeit der Drehung der Abscheideelemente 10 relativ zueinander ist bei entsprechenden Abscheidebereichen 14 besonders vorteilhaft. Bei solchen Abscheidebereichen 14 weisen diese jeweils gleiche Lochmuster auf, sind (zumindest gedacht) entlang der Diagonalen oder der Mittellängsachsen in vier Viertel unterteilt (geviertelter Abscheidebereich 14) und weisen zumindest in zwei aneinander angrenzenden Vierteln ein anderes Lochmuster (Teillochmuster) auf oder weisen entlang einer Umfangs-/Randlinie des Abscheidebereichs 14 jeweils unterschiedliche Teillochmuster auf, insbesondere in jedem Viertel ein anderes Teillochmuster.

Bei einer mit solchen Abscheideelementen 10 mit solchen Abscheidebereichen 14 gebildeten Abscheidekombination 30 weisen dessen Abscheideelemente 10 in einem rechteckigen, insbesondere quadratischen Abscheidebereich 14 jeweils gleiche Lochmuster auf, sind die Abscheideelemente 10 relativ zueinander gedreht (um 90° oder Vielfache von 90°) und die Abscheideelemente 10 weisen jeweils einen Abscheidebereich 14 mit vier Vierteln auf (jeder Abscheidebereich ist zumindest gedacht in vier Abschnitte (Viertel) unterteilt). Ferner weisen die Abscheideelemente 10 zumindest in zwei aneinander angrenzenden Vierteln ein anderes Teillochmuster auf oder die Abscheideelemente 10 weisen entlang einer Umfangs-/Randlinie des Abscheidebereichs 14 jeweils unterschiedliche Teillochmuster auf, insbesondere in jedem Viertel ein anderes Teillochmuster.

Eine symbolische Darstellung eines gevierteltem Abscheidebereichs 14 eines Abscheideelements 10 und der dortigen Teillochmuster ist wie folgt möglich, wobei A, **B,** C und D symbolisch unterschiedliche Teillochmuster darstellen:

| | |
|---|---|
| A | B |
| D | C |

Bei exemplarisch drei Abscheideelementen 10 (erstes Abschei-deelement 10, zweites Abscheideelement 10, drittes Abscheideelement 10), die beispielhaft relativ um jeweils 90° zueinander gedreht sind, lässt sich damit eine mögliche resultierende Konfiguration wie folgt darstellen, wobei die symbolische Darstellung der Abscheideelemente 10 hier nebeneinander erfolgt, während in einer Abscheidekombination 30 die Abscheideelemente 10 gestaffelt hintereinander angeordnet sind:

| | | |
|---|---|---|
| A B | D A | C D |
| D C | C B | B A |
| (erstes AbscheideElement 10) | (zweites Abscheideelement 10) | (drittes Abscheideelement 10) |

Gezeigt werden soll, dass auch bei Abscheideelementen 10 mit gleichem Lochmuster (hier einem Lochmuster mit den symbolisch mit A, B, C, D bezeichneten Teillochmustern in jedem Viertel der Abscheidebereiche 14) bei einer Drehung der Abscheideelemente 10 relativ zueinander innerhalb der Abscheidekombination 30 unterschiedliche Teillochmuster in Strömungsrichtung hintereinander liegen, so dass eine unmittelbare Durchströmung einer mit solchen Abscheideelementen 10 und so angeordneten Abscheideelementen 10 gebildeten Abscheidekombination 30 verhindert wird. Dies führt zu einer Umlenkung des Rohgasstroms R und/oder zu Wirbelbildungen zwischen den Abscheideelementen 10 und dies verbessert die Abscheidewirkung. Als Teillochmuster gilt ausdrücklich auch die Situation einer geschlossenen Fläche. Dann ist der Flächenbereich des jeweiligen Viertels geschlossen und weist keine Löcher auf (Teillochmuster ohne Löcher).

Zur Erläuterung der Definition, dass die Abscheideelemente 10 in einem geviertelten Abscheidebereich 14 entlang einer Umfangs-/Randlinie des Abscheidebereichs 14 jeweils unterschiedliche Teillochmuster aufweisen oder in jedem Viertel ein anderes Teillochmuster aufweisen, sind nachfolgend mehrere Lochmuster mit ebenfalls symbolisch mit A, B, C und D bezeichneten Teillochmustern gegenübergestellt:

| | | |
|---|---|---|
| A B | A B | A B |
| B A | B C | D C |

Bei dem links gezeigten Lochmuster, das nur zwei unterschiedliche Teillochmuster umfasst (A, B), ergeben sich entlang der Umfangs-/Randlinie des Abscheidebereichs 14 jeweils unterschiedliche Teillochmuster, nämlich die Teillochmuster A, B, A, B, [A, B, A, B usw.]. Entlang der Umfangs-/Randlinie folgen also niemals zwei gleiche Teillochmuster aufeinander.

Bei dem in der Mitte gezeigten Lochmuster, das drei unter-schiedliche Teillochmuster umfasst (A, **B,** C), ergeben sich entlang der Umfangs-/Randlinie des Abscheidebereichs 14 eben-falls jeweils unterschiedliche Teillochmuster, nämlich die Teillochmuster A, **B, C, B,** [A, **B,** C, B usw.]. Auch hier folgen entlang der Umfangs-/Randlinie niemals zwei gleiche Teillochmuster aufeinander.

Bei dem rechts gezeigten Lochmuster, das vier unterschiedliche Teillochmuster umfasst (A, **B,** C, D), ergeben sich entlang der Umfangs-/Randlinie des Abscheidebereichs 14 ebenfalls jeweils unterschiedliche Teillochmuster, nämlich die Teillochmuster A, **B, C, D,** [A, **B,** C, D usw.]. Auch hier folgen entlang der Umfangs-/Randlinie niemals zwei gleiche Teillochmuster aufeinander. Darüber hinaus sind bei diesem Lochmuster auch alle Teillochmuster unterschiedlich, so dass jedes Viertel ein anderes Teillochmuster aufweist.

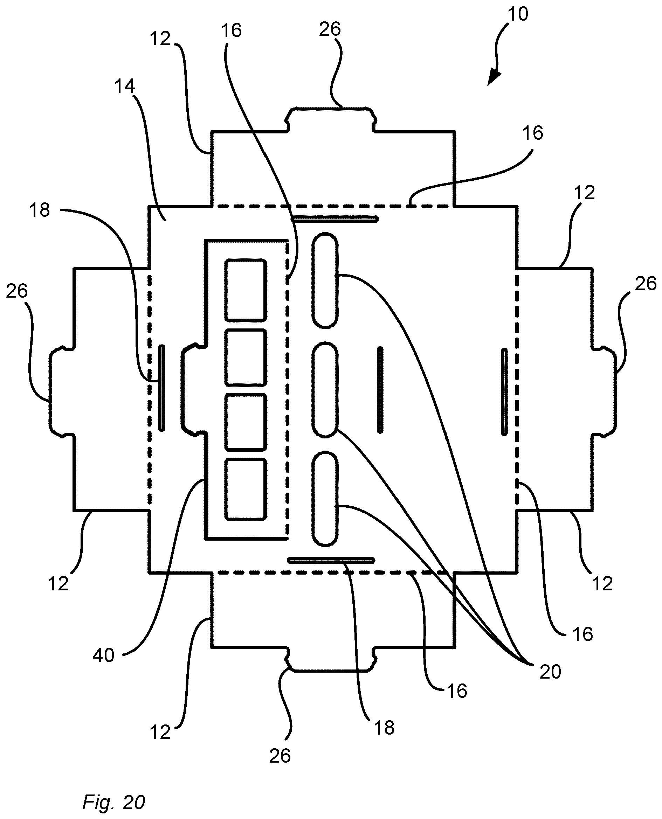

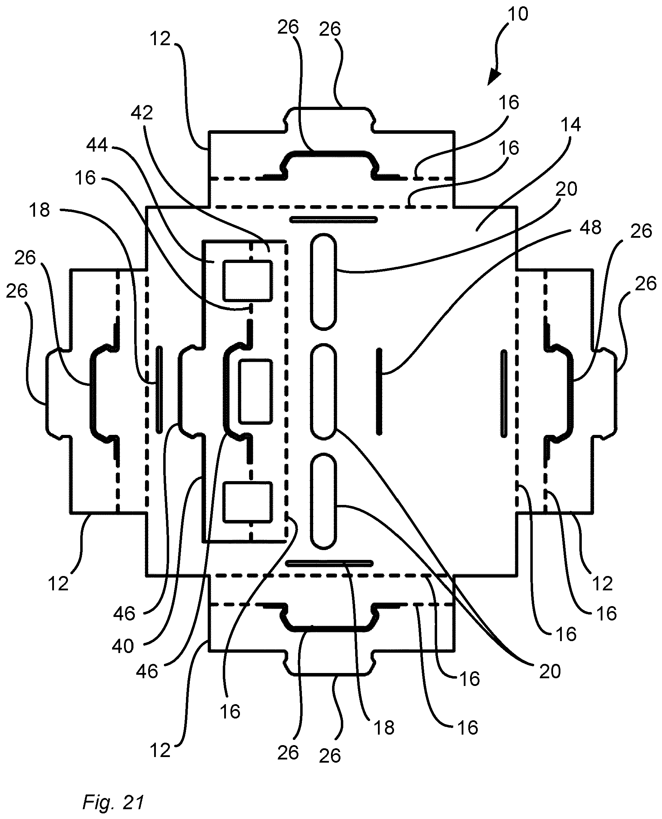

Die Darstellungen in Figur 20 und Figur 21 und die darauf basierenden nachfolgenden Darstellungen wenden sich nun der hier im Vordergrund stehenden Ausführungsform eines Abscheideelements 10 zu. Dabei geht es um eine Gestaltung des Abscheidebereichs 14. Danach weist der Abscheidebereich 14 einen Flächenabschnitt auf, der entsprechend seiner Form und Beweglichkeit (Beweglichkeit relativ zur restlichen Oberfläche des Abscheidebereichs 14) im Folgenden als Tür 40 bezeichnet wird.

Ein Abscheideelement 10 kann in seinem Abscheidebereich 14 genau eine Tür 40 oder eine Mehrzahl von Türen 40 aufweisen. Die nachfolgende Beschreibung wird - ausdrücklich ohne Verzicht auf eine weitergehende Allgemeingültigkeit - anhand der in den Figuren beispielhaft gezeigten Ausführungsform fortgesetzt, also anhand eines Abscheideelements 10 mit genau einer Tür 40 in dessen Abscheidebereich 14. Bei jeder Erwähnung eines Abscheideelements 10 mit genau einer Tür 40 ist aber stets auch eine eventuelle Mehrzahl von Türen 40 mitzulesen.

Eine Tür 40 im Abscheidebereich 14 des Abscheideelements 10 ist gelenkig mit dem Abscheidebereich 14 verbunden. Dafür weist das Abscheideelement 10 im Bereich des Übergangs zwischen dem Abscheidebereich 14 und der Tür 40 als gelenkige Verbindung eine Markierung, eine Perforation, eine Falz (oder Falzlinie), eine Kerbe (oder Kerblinie) oder Rillung oder dergleichen auf - im Folgenden zusammenfassend und entsprechend der bisherigen Terminologie als Knickstelle 16 bezeichnet.

Eine Tür 40 ist im Bereich der Knickstelle 16 mit dem Abscheidebereich 14 entweder einstückig verbunden und schließt dann im Bereich der Knickstelle 16 an den Abscheidebereich 14 an oder ist im Bereich der Knickstelle 16 mit dem Abscheidebereich 14 zum Beispiel durch Kleben, Tackern oder dergleichen verbunden und geht dann vom Abscheidebereich 14 aus.

Soweit hier und im Weiteren von einer "Tür 40 im Abscheidebereich 14" gesprochen wird, rechtfertigt sich dies daraus, dass die Tür im geschlossenen Zustand in der Ebene des Abscheidebereichs 14 oder zumindest im Wesentlichen in der Ebene des Abscheidebereichs 14 liegt, sowie daraus, dass im geöffneten Zustand, wenn also die Tür 40 an der Knickstelle 16 aus der Ebene des Abscheidebereichs 14 heraus verschwenkt wird, in der Oberfläche des Abscheidebereichs 14 eine Öffnung frei wird, insbesondere eine der Oberfläche der Tür 40 entsprechende Öffnung frei wird. Bevorzugt ist dies realisiert, indem die Tür 40 einerseits durch die Knickstelle 16 und andererseits durch eine jeweils an die Enden der Knickstelle 16 anschließende Randlinie begrenzt ist und der die Tür 40 bildende Flächenabschnitt des Abscheidebereichs 14 entlang der Randlinie mittels eines Schnitts oder mittels eines Stanzwerkzeugs von den angrenzenden Flächenabschnitten des Abscheidebereichs 14 getrennt ist. Aufgrund dieser Randlinie ergeben sich freie Kanten der Tür 40 und aufgrund derselben Randlinie zusammen mit der Knickstelle 16 ergibt sich die beim Öffnen der Tür 40 in der Oberfläche des Abscheidebereichs 14 frei werdende Öffnung.

Generell gilt, dass ein Abscheideelement 10 mit zumindest einer Tür 40 in dessen Abscheidebereich 14 darüber hinaus mehrere (zumindest zwei) Verbindungslaschen 12 aufweist, insbesondere Verbindungslaschen 12 wie weiter oben beschrieben. Zur Vermeidung von Wiederholungen der Merkmale der Verbindungslaschen 12 wird auf die bisherige Beschreibung verwiesen.

Bei der gezeigten Ausführungsform weist das Abscheideelement 10 vier an den zentralen Abscheidebereich 14 anschließende und im Folgenden oftmals weiterhin kurz nur als Laschen 12 bezeichnete Verbindungslaschen 12 auf. Bei diesen Laschen 12 kann es sich um Laschen 12 handeln, die zwecks Anpassung einer wirksamen Länge zumindest in zwei Abschnitte 22, 24 unterteilt sind, wobei jeder von jeweils einer Lasche 12 umfasste Abschnitt 22, 24 einen in einen Einsteckbereich 18 eines weiteren Abscheideelements 10 einsteckbaren Einsteckabschnitt 26 aufweist. Bei diesen Laschen 12 kann es sich alternativ um Laschen 12 handeln, bei denen eine solche Unterteilung fehlt, bei denen also jede Lasche 12 genau einen in einen Einsteckbereich 18 eines weiteren Abscheideelements 10 einsteckbaren Einsteckabschnitt 26 am Ende jeder Lasche 12 aufweist. Die Darstellung in Figur 20 zeigt eine Ausführungsform eines Abscheideelements 10 mit einer Tür 40 sowie mit Laschen 12 ohne eine Unterteilung der Laschen 12 in zumindest zwei Abschnitte 22, 24. Die Darstellung in Figur 21 zeigt eine Ausführungsform eines Abscheideelements 10 mit einer Tür 40 sowie mit Laschen 12 mit jeweils zumindest zwei Abschnitten 22, 24, wobei jeder Abschnitt 22, 24 einen in einen Einsteckbereich 18 eines weiteren Abscheideelements 10 einsteckbaren Einsteckabschnitt 26 aufweist.

Wenn die Laschen 12 eines Abscheideelements 10 zwecks Anpassung einer wirksamen Länge zumindest in zwei Abschnitte 22, 24 unterteilt sind, ist auch die Tür 40 desselben Abscheideelements 10 in gleicher Weise in zur Unterscheidung als Türabschnitte 42, 44 bezeichnete, insbesondere einstückig miteinander verbundene Abschnitte unterteilt oder kann zumindest als in solche Abschnitte unterteilt gedacht werden. Optional ist die Anzahl der Abschnitte 22, 24 der Laschen 12 und die Anzahl der Türabschnitte 42, 44 eines Abscheideelements 10 jeweils gleich. Bei Laschen 12 mit genau zwei Abschnitten 22, 24 umfasst die oder jede Tür 40 zum Beispiel entsprechend ebenfalls genau zwei Türabschnitte 42, 44.

Wenn die Laschen 12 keine Unterteilung in mehrere Abschnitte 22, 24 aufweisen, ist üblicherweise eine solche Unterteilung auch bei der Tür 40 nicht gegeben. Eine Unterteilung der Tür 40 kann jedoch auch dann gegeben sein, und dies ermöglicht die Verwendung eines solchen Abscheideelements 10 mit Abscheideelementen 10 mit unterschiedlich langen, aber nicht in mehrere Abschnitte unterteilten Verbindungslaschen 12.

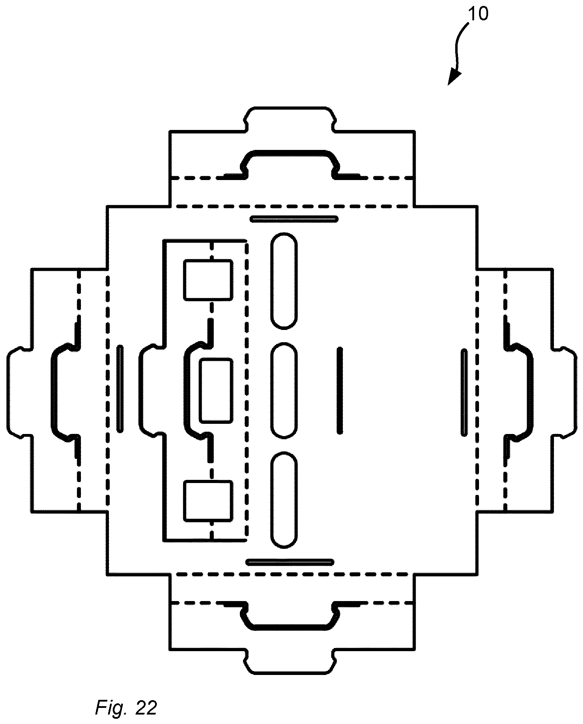

Die Darstellung in Figur 21 zeigt eine in zwei Türabschnitte 42, 44 unterteilte Tür 40 im Abscheidebereich 14 des Abscheideelements 10. Die Darstellung in Figur 20 zeigt eine Tür 40 im Abscheidebereich 14 des Abscheideelements 10 ohne eine solche Unterteilung. Zur besseren Übersicht über die in Figur 21 gezeigten Verhältnisse wiederholt die Darstellung in Figur 22 die Darstellung aus Figur 21 im Wesentlichen ohne Bezugszeichen.

Im Falle einer Unterteilung einer Tür 40 in zumindest zwei Türabschnitte 42, 44 ist dies zwecks Anpassung einer wirksamen Länge der Tür 40 vorgesehen. Funktional entspricht die Anpassung einer wirksamen Länge der Tür 40 der weiter oben beschriebenen Anpassung der wirksamen Länge einer Lasche 12 und auf die dortige Beschreibung wird hiermit entsprechend verwiesen.

Zur Anpassung einer wirksamen Länge der Tür 40 befindet sich zwischen aneinander angrenzenden Türabschnitten 42, 44 eine Markierung, eine Perforation, eine Falz (oder Falzlinie), eine Kerbe (oder Kerblinie) oder Rillung oder dergleichen - im Folgenden zusammenfassend und entsprechend der bisherigen Terminologie als Knickstelle 16 bezeichnet. Die Knickstelle 16 ist zum definierten Umknicken eines Türabschnitts (zusammen mit ggf. daran anschließenden weiteren Türabschnitten) gegen den in Richtung auf den Abscheidebereich 14 unmittelbar vorangehenden Türabschnitt vorgesehen. Bei genau zwei Türabschnitten 42, 44 (erster Türabschnitt 42, zweiter Türabschnitt 44) gibt es entsprechend genau eine Knickstelle 16 zwischen den Türabschnitten 42, 44, nämlich eine Knickstelle 16 zwischen dem ersten Türabschnitt 42 und dem zweiten Türabschnitt 44, und diese ist zum definierten Umknicken des zweiten Türabschnitts 44 gegen den ersten Türabschnitt 42 vorgesehen.

Für die Länge einer Tür 40 und die Länge davon ggf. umfasster Türabschnitte 42, 44 sowie für die wirksame Länge einer Tür 40 gilt das weiter oben für die Länge einer Lasche 12 und die Länge davon umfasster Abschnitte 22, 24 Gesagte entsprechend und zur Vermeidung von Wiederholungen wird hiermit darauf verwiesen.

Die Länge einer Tür 40 eines Abscheideelements 10 entspricht der Länge der an den Abscheidebereich 14 angrenzenden Laschen 12 dieses Abscheideelements 10. Dies gilt unabhängig davon, ob die Tür 40 und die Laschen 12 in mehrere Abschnitte 22, 24 bzw. Türabschnitte 42, 44 unterteilt sind oder nicht. Bei einer Unterteilung der Laschen 12 in zumindest zwei Abschnitte 22, 24 und einer Unterteilung der Tür 40 in ebenfalls zumindest zwei Türabschnitte 42, 44 weisen die Laschen 12 und die Tür 40 dieselbe Anzahl von Abschnitten 22, 24 bzw. Türabschnitten 42, 44 auf, also zum Beispiel jeweils genau zwei Abschnitte 22, 24 bzw. Türabschnitte 42, 44, und die jeweils miteinander korrespondierenden Abschnitte 22, 24 bzw. Türabschnitte 42, 44 sind jeweils gleich lang.

Bei einer Tür 40 ohne Unterteilung weist diese an ihrem freien Ende, bevorzugt mittig, einen Türeinsteckabschnitt 46 auf, der funktional dem Einsteckabschnitt 26 einer Lasche 12 entspricht. Bei einer zumindest zwei Türabschnitte 42, 44 umfassenden Tür 40 weist jeder Türabschnitt 42, 44 einen solchen Türeinsteckabschnitt 46 auf, bevorzugt jeweils mittig. Zum Einstecken eines Türeinsteckabschnitts 46 ist im Abscheidebereich 14 als Türeinsteckbereich 48 ein Schlitz vorgesehen, der im Folgenden auch als Türeinsteckschlitz 48 oder kurz als Schlitz 48 bezeichnet wird. Für den Türeinsteckabschnitt 46 und den Türeinsteckbereich 48 gilt das oben für den Einsteckabschnitt 26 bzw. den Einsteckbereich 18 Gesagte entsprechend und zur Vermeidung von Wiederholungen wird hiermit darauf verwiesen.

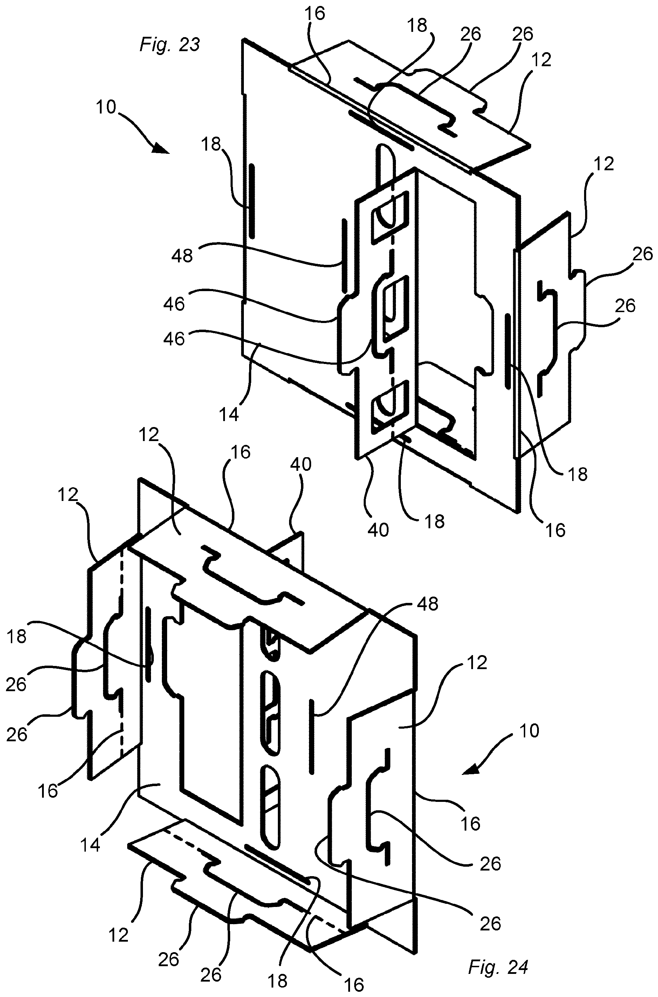

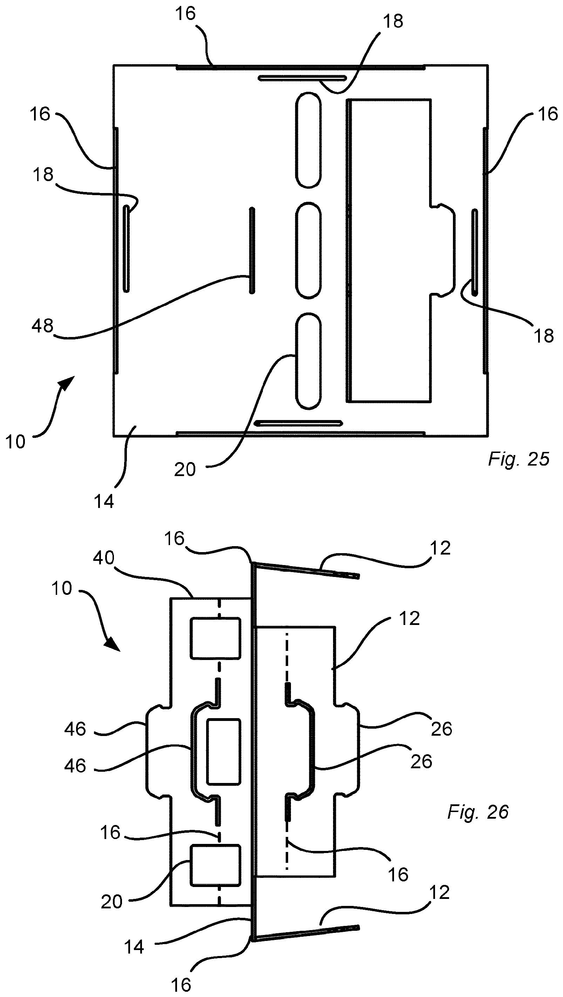

Die Darstellungen in Figur 23 und Figur 24 zeigen isometrische Ansichten eines Abscheideelements 10 gemäß Figur 21 und Figur 22 in einer für den Gebrauch vorbereiteten Konfiguration. Die Darstellungen in Figur 25 und Figur 26 zeigen das Abscheideelement 10 gemäß Figur 21 und Figur 22 in einer Frontansicht bzw. einer Seitenansicht.

Für den Gebrauch vorbereitet ist das Abscheideelement 10 indem die Laschen 12 zur Verbindung mit einem weiteren Abscheideelement 10 gegen die Oberfläche des Abscheidebereichs 14 umgeknickt und die Tür 40 geöffnet ist. Die geöffnete Tür 40 ist aus der Oberfläche des Abscheidebereichs 14 herausgeschwenkt. Gezeigt ist eine Situation, bei der die Laschen 12 und die Tür 40 in unterschiedliche Richtungen, aber jeweils um 90° oder zumindest im Wesentlichen um 90° gegen die Oberfläche des Abscheidebereichs 14 verschwenkt sind. Genauso ist ein Verschwenken von Tür 40 und Laschen 12 in dieselbe Richtung möglich. Dann weist die Tür 40 mit ihrem Türeinsteckabschnitt 46 in dieselbe Richtung wie die Laschen 12 mit den dortigen Einsteckabschnitten 26. Beim ersten oder vorderen Abscheideelement 10 einer Abscheidekombination 30 weist dieses entweder keine Tür auf (es handelt sich dann zum Beispiel um ein Abscheideelement 10 wie in der DE 20 2022 102 215.1 beschrieben), oder die Tür 40 ist bei einem Abscheideelement 10 mit Tür 40 geschlossen oder die Tür 40 ist entfernt.

Das Verbinden eines eine Tür 40 umfassenden Abscheideelements 10 (erstes Abscheideelement 10) mit einem weiteren Abscheideelement 10 (zweites Abschei-deelement 10) geschieht zum Beispiel wie folgt: Der Türeinsteckabschnitt 46 am Ende der geöffneten Tür 40 des ersten Abscheideelements 10 wird in den Türeinsteckschlitz 48 des zweiten Abscheideelements 10 eingesteckt und es werden die Einsteckabschnitte 26 der Laschen 12 des zweiten Abscheideelements 10 in die Schlitze 18 des ersten Abscheideelement 10 eingesteckt. Die beiden Abscheideelemente 10 sind damit (lösbar) miteinander verbunden und die Tür 40 ist in geöffnetem Zustand fixiert.

Bei der gezeigten Ausführungsform befindet sich der die Tür 40 bildende Flächenabschnitt des Abscheidebereichs 14 ersichtlich - in grundsätzlich optionaler Art und Weise - außerhalb der Mitte des Abscheidebereichs 14 (außermittig). Genauso befindet sich auch der Türeinsteckschlitz 48 außerhalb der Mitte des Abscheidebereichs 14 (außermittig). Dies ermöglicht eine lösbare Verbindung mehrerer gleichartiger, jeweils eine Tür 40 und einen Türeinsteckschlitz 48 umfassende Abscheideelemente 10 miteinander. Wenn bei einem Abscheideelement 10 dessen Tür 40 im Abscheidebereich 14 geöffnet wird, resultiert aufgrund des Öffnens der Tür 40 eine Öffnung des Abscheidebereichs 14 und eine Freifläche im Abscheidebereich 14. Hier kann sich kein Türeinsteckschlitz 48 befinden. Dies ist der Grund für die außermittige Platzierung sowohl der Tür 40 als auch des Türeinsteckschlitzes 48. Aufgrund der außermittigen Platzierung ist beim Verbinden zweier Abscheideelemente 10 (Verbinden mittels der Laschen 12), welche jeweils eine Tür 40 und einen Türeinsteckschlitz 48 aufweisen, eine Drehung der beiden Abscheideelemente 10 (erstes und vorderes Abscheideelement 10, zweites und hinteres Abscheideelement 10) relativ zueinander um 180° vorgesehen. Die Drehung bringt die Tür 40 des hinteren Abscheideelements 10 in eine Position hinter oder - je nach Orientierung und Sichtachse - unter dem Türeinsteckbereich 48 des vorderen Abscheideelements 10 (dies gilt im Falle einer Öffnung der Tür 40 entgegengesetzt zur Richtung umgeknickter Laschen 12). Dort kann der Türeinsteckabschnitt 46 der geöffneten Tür 40 in den Türeinsteckschlitz 48 des vorderen Abscheideelements 10 eingesteckt werden.

Bei einem Abscheideelement 10 mit einem quadratischen Abscheidebereich 14 und mit mehr als einem Türeinsteckbereich 48 ist auch eine Drehung zweier Abscheideelemente 10 relativ zueinander um 90° oder Vielfache von 90° möglich. Das Abscheideelement 10 weist dann im Abscheidebereich 14 einen Türeinsteckbereich 48 mit einer Orientierung wie in den Figuren gezeigt sowie zumindest einen weiteren Türeinsteckbereich 48 mit einer dazu senkrechten Orientierung auf. Optional weisen die Türeinsteckbereiche 48 dann eine im Vergleich zu der gezeigten Länge kürzere Länge auf und in entsprechender Art und Weise ist dann auch der oder jeder Türeinsteckabschnitt 46 kürzer. Nochmals weiter optional grenzt der oder jeder Türeinsteckabschnitt 46 außermittig an den jeweiligen Türabschnitt 42, 44 an und die Türeinsteckbereiche 48 sind dann im Abscheidebereich 14 zur Aufnahme jeweils eines Türabschnitts 42, 44 entsprechend positioniert.

Bei einer Öffnung der Tür 40 in Richtung der umgeknickten Laschen 12 - also anders als in Figur 23 und Figur 24 gezeigt - bringt die Drehung die Tür des vorderen Abscheideelements 10 in eine Position vor oder - je nach Orientierung und Sichtachse - über dem Türeinsteckbereich 48 des hinteren Abscheideelements 10. Dort kann der Türeinsteckabschnitt 46 der geöffneten Tür 40 in den Türeinsteckschlitz 48 des hinteren Abscheideelements 10 eingesteckt werden.

Bei einer zumindest zwei Türabschnitte 42, 44 umfassenden Tür 40 dient diese Unterteilung - wie die entsprechende Unterteilung der Laschen 12 - der Anpassung einer wirksamen Länge der Tür 40 und die Tür 40 ist zwecks Anpassung ihrer wirksamen Länge in die zumindest zwei Türabschnitte 42, 44 unterteilt.

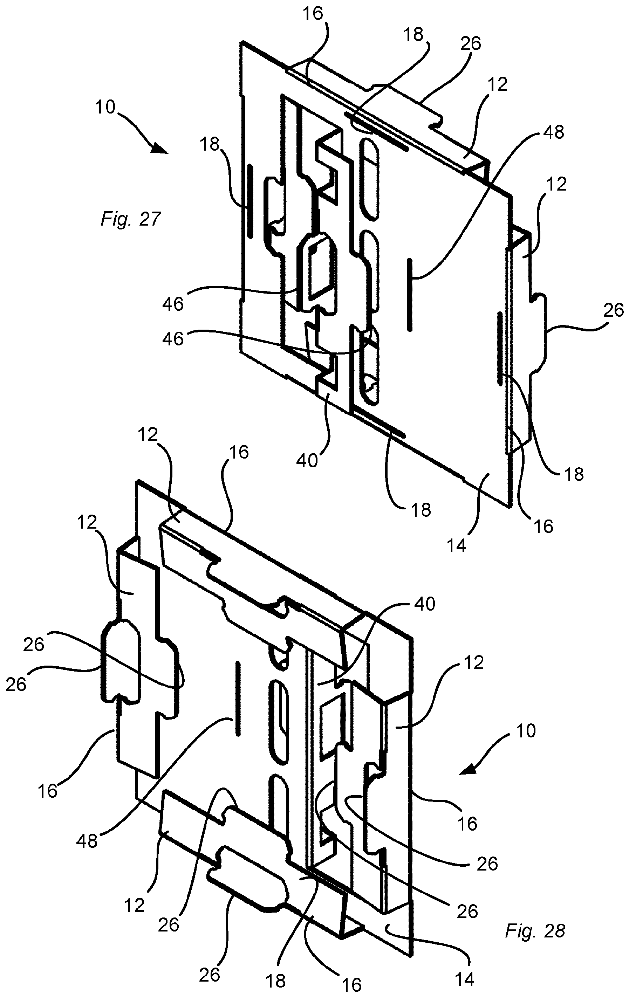

In der in Figur 23 und Figur 24 gezeigten Situation fluchten die von der Tür 40 umfassten Türabschnitte 42, 44 miteinander und die Tür 40 hat ersichtlich eine wirksame Länge, die der Summe der Längen der beiden Türabschnitte 42, 44 entspricht. Diese wirksame Länge der Tür 40 ist vorgesehen und kommt zur Anwendung, wenn die Verbindung zweier Abscheideelemente 10, die jeweils eine Tür 40 und einen Türeinsteckschlitz 48 aufweisen, mittels Laschen 12 mit derselben wirksamen Länge erfolgt. In der in Figur 27 und Figur 28 gezeigten Situation ist demgegenüber ein Abscheideelement 10 gemäß Figur 21, Figur 22 gezeigt, bei dem die wirksame Länge der Tür 40 reduziert ist. Ebenso sind die wirksamen Längen der Laschen 12 reduziert. Die wirksamen Längen der Tür 40 und der Laschen 12 sind gleich. Ansonsten zeigen die Darstellungen in Figur 27 und Figur 28 - wie die Darstellungen in Figur 23 und Figur 24 - isometrische Ansichten eines Abscheideelements 10 gemäß Figur 21, Figur 22 in einer für den Gebrauch vorbereiteten Konfiguration. Gezeigt ist - wie bei den Darstellungen in Figur 23 und Figur 24 - eine Situation, bei der die Laschen 12 und die Tür 40 in unterschiedliche Richtungen gegen die Oberfläche des Abscheidebereichs 14 verschwenkt sind. Auch hier wäre genauso ein Verschwenken von Tür 40 und Laschen 12 in dieselbe Richtung möglich.

Die Reduktion der wirksamen Länge von Tür 40 und Laschen 12 erfolgt/ist gegeben, indem bei jeweils zwei Abschnitten 22, 24 (erster oder innerer Laschenabschnitt 22, angrenzend an den Abscheidebereich 14; zweiter oder äußerer Laschenabschnitt 24, angrenzend an den inneren Laschenabschnitt 22) bzw. Türabschnitten 42, 44 (erster oder innerer Türabschnitt 42, angrenzend an den Abscheidebereich 14; zweiter oder äußerer Türabschnitt 44, angrenzend an den inneren Türabschnitt 42) der äußere Laschenabschnitt 24 gegen den inneren Laschenabschnitt 22 umgeknickt wird bzw. ist und der innere Laschenabschnitt 22 gegen die Oberfläche des Abscheidebereichs 14 umgeknickt wird bzw. ist sowie in entsprechender Art und Weise der äußere Türabschnitt 44 gegen den inneren Türabschnitt 42 umgeknickt wird bzw. ist und der innere Türabschnitt 42 gegen die Oberfläche des Abscheidebereichs 14 umgeknickt wird bzw. ist. Dieses Umknicken erfolgt bevorzugt um einen Winkel von jeweils ca. 90°. Durch das Umknicken der äußeren Laschenabschnitte 24 bzw. des äußeren Türabschnitts 44 werden jeweils die Einsteckabschnitte 26 der inneren Laschenabschnitte 22 und der Türeinsteckabschnitt 46 des inneren Türabschnitts 42 frei (sind aus der Fläche des jeweiligen äußeren Laschen- bzw. Türabschnitts 24, 44 herausgelöst). Diese Einsteckabschnitte 26 können in entsprechende Schlitze 18 eines jeweils anderen Abscheideelements 10 eingesteckt werden und sind bei jeweils zwei miteinander verbundenen Abscheideelementen 10 in entsprechende Schlitze 18 des anderen Abscheideelements 10 eingesteckt. Genauso kann dieser Türeinsteckabschnitt 46 in den Türeinsteckschlitz 48 des anderen Abscheideelements 10 eingesteckt werden und ist bei jeweils zwei miteinander verbundenen Abscheideelementen 10 in den Türeinsteckschlitz 48 des anderen Abscheideelements 10 eingesteckt.

Abscheideelemente 10 mit jeweils zumindest einer Tür 40 und jeweils zumindest einem Türeinsteckschlitz 48 sind in grundsätzlich gleicher Art und Weise jeweils paarweise lösbar miteinander verbindbar, wie dies weiter oben für Abscheideelemente 10 ohne Türen beschrieben wurde und erneut wird damit hier zur Vermeidung unnötiger Wiederholungen auf das oben zum Verbinden jeweils zweier Abscheideelemente 10 oder einer Mehrzahl von Abscheideelementen 10 sowie zur Bildung einer Abscheidekombination 30 mittels zumindest zweier Abscheideelemente 10 Gesagte verwiesen.

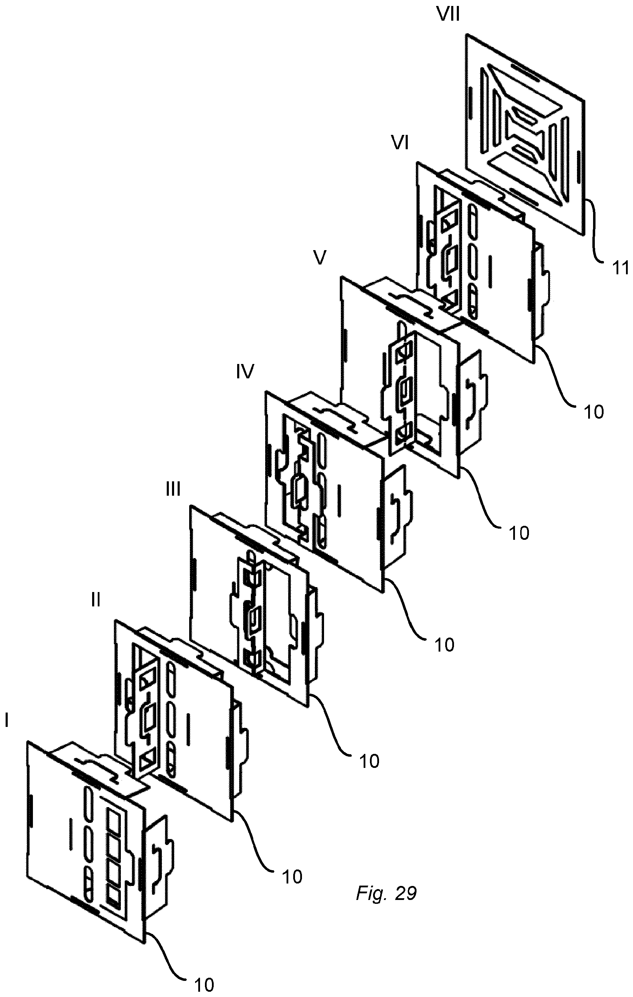

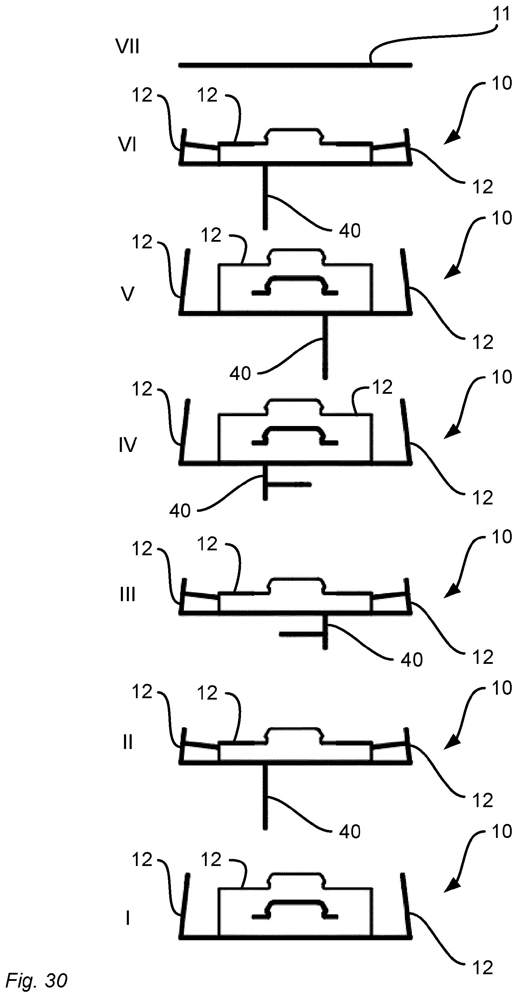

Die Darstellungen in Figur 29 und Figur 30 zeigen eine Mehrzahl von Abscheideelementen 10 jeweils mit Türen 40. Die Darstellung in Figur 29 zeigt diese gestaffelt hintereinander angeordnet in einer isometrischen Ansicht und die Darstellung in Figur 30 zeigt die selbe Abfolge von Abscheideelementen 10 in einer Draufsicht mit einer Blickachse entlang der Oberflächen der jeweiligen Abscheidebereiche 14. Die Abscheideelemente 10 sind zur erleichterten Bezugnahme mit römischen Ziffern (I bis VI) bezeichnet.

Es sei betont, dass es sich bei dem mit römisch I bezeichneten Abscheideelement 10 bis hin zu dem mit römisch VI bezeichneten Abscheideelement 10 um identische Abscheideelemente 10 handelt. Die erkennbar unterschiedlichen Konfigurationen ergeben sich aufgrund unterschiedlicher wirksamer Längen der Laschen 12 und der Türen 40 sowie aufgrund einer jeweiligen Drehung der Abscheideelemente 10 relativ zueinander.

Es sei weiterhin betont, dass die Abfolge der Abscheideelemente 10 in den Darstellungen in Figur 29 und Figur 30 lediglich eine beispielhafte Abfolge ist und dass eine andere Anzahl und/oder eine andere Abfolge von Abscheideelementen 10 jederzeit möglich ist und als von der hier vorgelegten Beschreibung umfasst gelten soll. In den Darstellungen in Figur 29 und in Figur 30 wurden mit Hinblick auf die Übersichtlichkeit der Darstellungen nur wenige Bezugsziffern verwendet.

In den Darstellungen in Figur 29 und in Figur 30, vor allem in der Darstellung in Figur 30, ist die aufgrund der Drehung jeweils zweier miteinander zu verbindender (und in gebrauchsfähigem Zustand miteinander verbundenen) Abscheideelemente 10 resultierende unterschiedliche Position der Türen 40 gut erkennbar. Bezogen auf die Situation der Darstellung in Figur 30 erkennt man bei den mit römisch **II,** römisch IV und römisch V bezeichneten Abscheideelementen 10 die Tür 40 auf der linken Seite und bei den mit römisch III und römisch V bezeichneten Abscheideelementen 10 auf der rechten Seite. Bei dem mit römisch I bezeichneten Abscheideelement 10 ist dessen Tür 40 nicht geöffnet oder abgetrennt. Eine geöffnete Tür würde sich auf der rechten Seite befinden.

Bei entgegengesetzt zur Richtung der Laschen 12 geöffneten Türen 40 (wie in Figur 29, Figur 30 und Figur 31 gezeigt) sind bei jeweils zwei miteinander zu verbindenden - und in gebrauchsfähigem Zustand miteinander verbundenen - Abscheideelementen 10 (erstes Abscheideelement 10, zweites Abscheideelement 10) die wirksame Länge der Laschen 12 des ersten Abscheideelements 10 und die wirksame Länge der Tür 40 des zweiten Abscheideelements 10 gleich. Dies gilt ersichtlich für alle in Figur 29, Figur 30 und Figur 31 gezeigten Paare von Abscheideelementen 10 (I, II; **II,** III; **III,** IV; IV, V und V, VI). Bei in Richtung der Laschen 12 geöffneten Türen (nicht gezeigt) sind die Verhältnisse anders. Dann sind jeweils die wirksame Länge der Laschen 12 und die wirksame Länge der Tür 40 ein und desselben Abscheideelements 10 gleich.

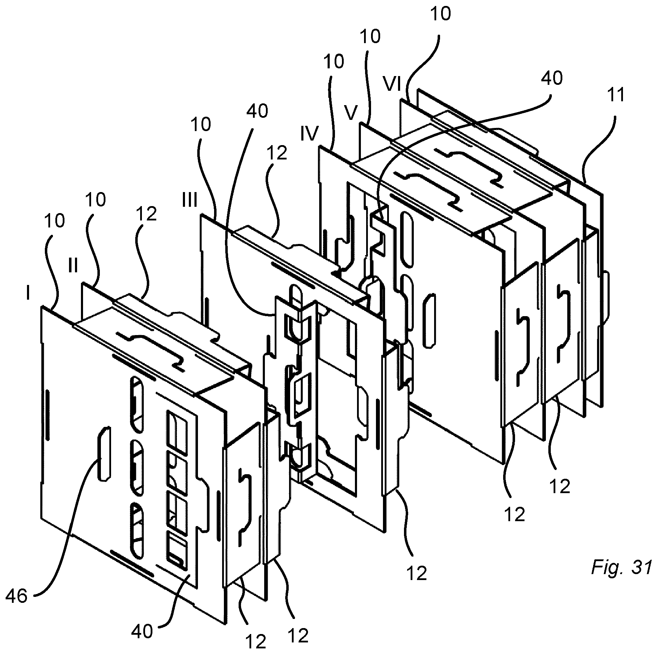

Die Darstellung in Figur 31 zeigt - ähnlich wie die Darstellung in Figur 17 - eine Momentaufnahme beim Verbinden mehrerer Abscheideelemente 10 miteinander, wobei unterschiedliche wirksame Längen der Laschen 12 und der Türen 40 zur Anwendung kommen. Die Abfolge der Abscheideelemente 10 entspricht der beispielhaften Abfolge gemäß Figur 29 und Figur 30.

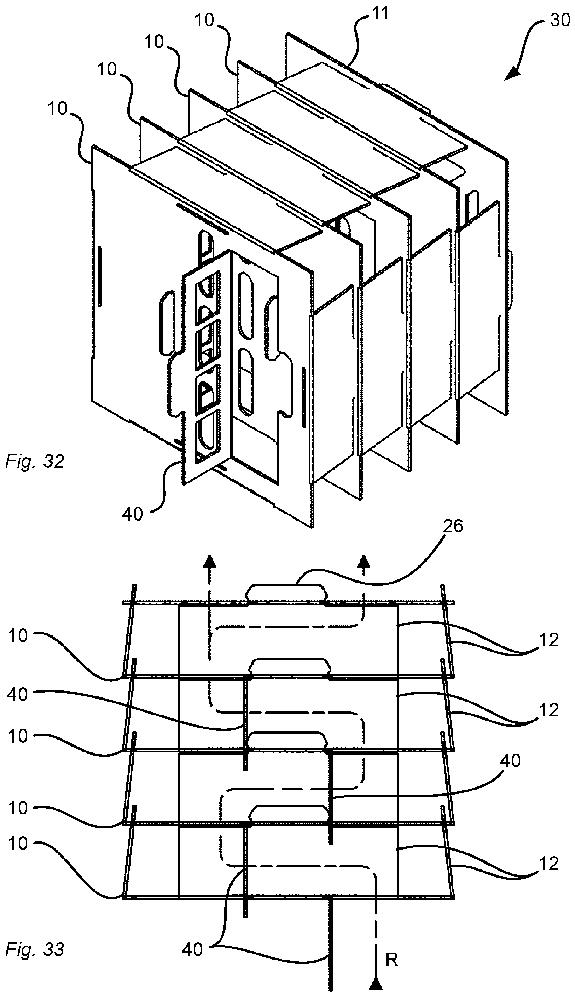

Die Darstellung in Figur 32 zeigt - ähnlich wie die Darstellungen in Figur 15, Figur 16 und Figur 18 - eine Abscheidekombination 30. Bei der Abscheidekombination 30 handelt es sich um eine mit Abscheideelementen 10 mit jeweils zumindest einer Tür 40 gebildete Abscheidekombination 30. Beispielhaft gezeigt sind Abscheideelemente 10 mit Laschen 12 ohne eine Unterteilung in mehrere Abschnitte und entsprechend Abscheideelemente 10 mit jeweils einer Tür 40 ebenfalls ohne eine solche Unterteilung in mehrere Abschnitte. Selbstverständlich ist genauso eine Abscheidekombination 30 mit Abscheideelementen 10 möglich, bei denen die dortigen Laschen 12 und die zumindest eine Tür 40 in jeweils zumindest zwei Abschnitte (Laschenabschnitte 22,24; Türabschnitte 42,44) unterteilt sind. Ebenso ist eine Mischkonfiguration möglich. Dann umfasst die Abscheidekombination 30 zumindest ein Abscheideelement 10 mit einer Unterteilung der Laschen 12 und der jeweils zumindest einen Tür 40 und ebenso zumindest ein Abscheideelement 10 ohne eine solche Unterteilung.

Die Darstellung in Figur 33 zeigt mittels der gestrichelten und an den Enden bepfeilten Linie den Strömungsweg eines Rohgasstroms R durch eine Abscheidekombination 30, bei der die davon umfassten Abscheideelemente 10 jeweils zumindest eine Tür 40 aufweisen. Dafür zeigt die Darstellung in Figur 33 exemplarisch die Abscheidekombination 30 gemäß Figur 32 in einer geschnittenen Seitenansicht.

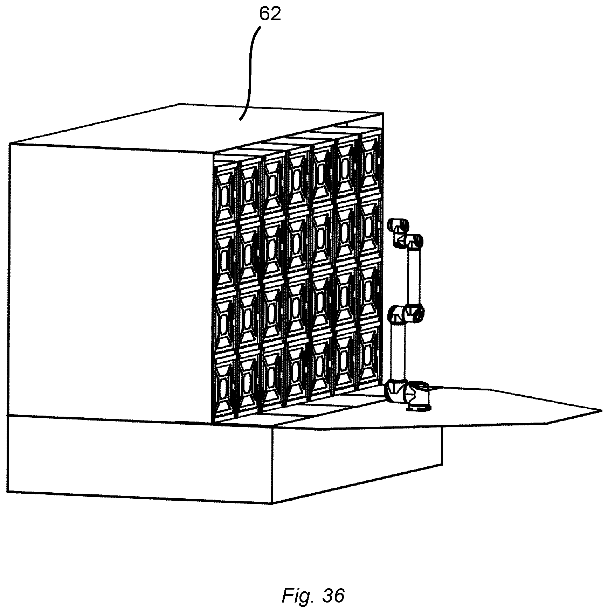

Die Abscheidekombination 30 wird bei bestimmungsgemäßer Verwendung, zum Beispiel bei einer Verwendung in einer Lackieranlage (Fig. 36), von einem mit Partikeln beladenen Rohgasstrom R angeströmt und der Rohgasstrom R strömt durch die Abscheidekombination 30 hindurch, nämlich zumindest durch die sich aufgrund der geöffneten Türen 40 ergebenden Freiflächen in den einzelnen Abscheidebereichen 14. Aufgrund der Drehung jeweils zweier Abscheideelemente 10 relativ zueinander (hier beispielhaft in Form von Drehungen um jeweils 180° relativ zueinander dargestellt) ergibt sich eine alternierende Abfolge der Position der Türen 40 jeweils in Strömungsrichtung des Rohgasstroms R hintereinander liegender Abscheideelemente 10 (bei der Erläuterung der Darstellungen in Figur 29 und Figur 30 wurde diese alternierende Abfolge der Position der Türen 40 als zum Teil links befindliche Türen 40 und zum Teil rechts befindliche Türen 40 beschrieben).

Aufgrund der alternierenden Abfolge der Position der Türen 40 resultiert eine mehrfache Umlenkung des Rohgasstroms R innerhalb der Abscheidekombination 30. Im Anschluss an eine offene Tür 40 trifft der Rohgasstrom R auf den Abscheidebereich 14, der im Auftreffbereich optional keine Löcher aufweist (lochfrei) oder nur wenige und/oder nur kleine Löcher aufweist, des hinter (in Richtung der lokalen Strömung) der offenen Tür 40 liegenden Abscheideelements 10. Der Rohgasstrom R erfährt hier eine Richtungsänderung und strömt im Wesentlichen entlang des Abscheidebereichs 14 (und begrenzt von dem Abscheidebereich 14 des stromaufwärts befindlichen Abscheideelements 10) bis zur nächsten offenen Tür 40. Hier tritt der Rohgasstrom R durch die Tür 40 hindurch und trifft danach erneut auf den Abscheidebereich des hinter der offenen Tür 40 liegenden Abscheideelements 10 und so weiter. Diese mehrfache Umlenkung führt zu einer mehrfachen Änderung der Strömungsrichtung und es ergibt sich ein mäanderförmiger Verlauf des Rohgasstroms R durch die Abscheidekombination 30.

Diese mehrfache Umlenkung führt neben einer mehrfachen Änderung der Strömungsrichtung zu Wirbelbildungen und/oder lokalen Änderungen der Strömungsgeschwindigkeit und dies verbessert die Abscheidewirkung eines einzelnen Abscheideelements 10 und der Abscheidekombination 30 insgesamt. Die Abscheidung findet dann vor allem an den die Änderung der Strömungsrichtung bewirkenden Flächenabschnitten, also insbesondere der von dem Rohgasstrom getroffenen Oberflächen der Türen 40 und den jeweils hinter einer offenen Tür 40 liegenden Oberflächenbereichen der Abscheidebereiche 14 statt. Optional weisen die Abscheideelemente 10 in ihren Abscheidebereichen 14 Löcher 20 wie weiter oben beschrieben auf. Dies verstärkt die Wirbelbildung und führt zu einer nochmals weiter verbesserten Abscheidewirkung und die Abscheidung findet dann auch an den Randlinien und/oder Randflächen der Löcher 20 statt.

Bei der gezeigten Ausführungsform befinden sich die Türen 40 in grundsätzlich optionaler Art und Weise selbst im Strömungsweg des resultierenden Rohgasstroms R durch die Abscheidekombination 30. Dann sind die Türen 40 zum Zwecke eines Durchtritts des Rohgasstroms R strukturiert und weisen im Folgenden zusammenfassend als Löcher 20 bezeichnete Ausstanzungen, Löcher oder dergleichen auf. Die Löcher 20 erlauben bei einer Verwendung des Abscheideelements 10 zum Abscheiden von mit einem Rohgasstrom R mitgeführten Partikeln einen Durchtritt des anströmenden Rohgasstroms R. Auf die Art und die Anzahl der Löcher 20 und eine aufgrund der Art und der Anzahl der Löcher 20 resultierende Oberflächenstruktur und/oder ein aufgrund der Art und der Anzahl der Löcher 20 resultierendes Lochmuster kommt es nicht an und entsprechend sind grundsätzlich beliebige Oberflächenstrukturen bzw. Lochmuster möglich und sollen mit diesem Hinweis als von der hier vorgelegten Beschreibung umfasst gelten. Auch dieser Durchtritt des Rohgasstroms R durch die Türen 40, nämlich durch die von den Türen 40 umfassten Löcher 20, führt zu einer Verbesserung der Abscheidewirkung. Die Abscheidung findet dann auch an den Randlinien und/oder Randflächen der Löcher 20 der Türen 40 statt.

In den Darstellungen in Figur 23 bis Figur 33 sind die Tür 40 eines Abscheideelements 10 und die Verbindungslaschen 12 desselben Abscheideelements 10 in - bezogen auf die Ebene des jeweiligen Abscheidebereichs 14 - unterschiedliche Richtungen geknickt, die Tür 40 also gewissermaßen in Richtung auf einen anströmenden Rohgasstrom R (Fig. 33) und die Verbindungslaschen 12 vom anströmenden Rohgasstrom R weg. Dies ist eine Möglichkeit und in den Figuren wurde diese Möglichkeit aufgrund der besseren Übersicht und der besseren Unterscheidbarkeit - vor allem in den Seitenansichten - der Tür 40 und der Verbindungslaschen 12 gezeigt. Gleichwohl ist zu betonen, dass die Tür 40 (zumindest eine Tür 40) und die Verbindungslaschen 12 auch in dieselbe Richtung geknickt sein können, also allesamt in Richtung auf einen anströmenden Rohgasstrom R oder allesamt vom anströmenden Rohgasstrom R weg.

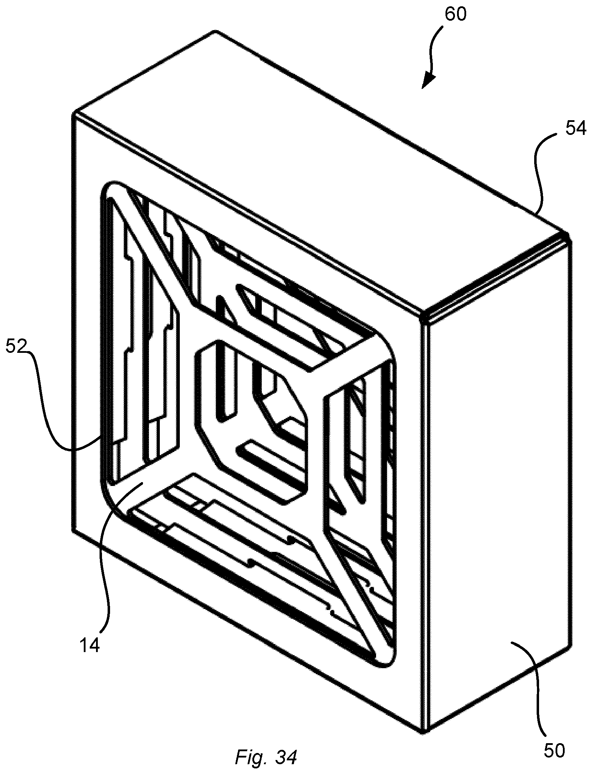

Die Darstellung in Figur 34 zeigt einerseits eine Abscheidekombination 30 gemäß Figur 15, Figur 16, Figur 18 und Figur 19 oder gemäß Figur 32 sowie andererseits einen zur Aufnahme der Abscheidekombination 30 bestimmten Rahmen 50. Der Rahmen 50 weist in einander gegenüberliegenden Seitenflächen große Öffnungen auf, die zur Unterscheidung und entsprechend der jeweiligen Funktion als Einströmöffnung 52 und Ausströmöffnung bezeichnet werden. Zum Verschließen weist der Rahmen 50 Verschlussmittel 54 auf, also zum Beispiel eine oder mehrere Verschlusslaschen 54.

Als Rahmen 50 fungiert zum Beispiel eine - abgesehen von der Einströmöffnung 52 sowie der Ausströmöffnung - herkömmliche oder im Wesentlichen herkömmliche Faltschachtel (Karton), also eine Faltschachtel, wie sie ansonsten auch für Verpackungs- und/oder Versandzwecke Verwendung finden könnte. Als Material für den Rahmen 50 kommt zum Beispiel Karton, Pappe (insbesondere Vollpappe oder Wellpappe), Kunststoff, Metall (insbesondere pyrolysebeständiges Metall) oder dergleichen in Betracht.

Der Rahmen 50 nimmt die Abscheidekombination 30 formschlüssig oder zumindest im Wesentlichen formschlüssig auf. Dies bedeutet, dass der Rahmen 50 in Bezug auf eine jeweilige Abscheidekombination 30 oder eine Abscheidekombination 30 und eine Anzahl davon umfasster und miteinander verbundener Abscheideelemente 10 in Bezug auf den Rahmen 50 so ausgeführt ist, dass der Innenraum des Rahmens 50 die Abscheidekombination 30 aufnimmt und diese dabei bis zu jeder Innenoberfläche des Rahmens 50 reicht oder zumindest im Wesentlichen bis zu jeder Innenoberfläche des Rahmens 50 reicht. Jedenfalls entspricht (entspricht oder entspricht zumindest im Wesentlichen) eine - von der Einströmöffnung 52 zur Ausströmöffnung gemessene - Tiefe des Rahmens 50 einer - ausgehend von einem ersten Abschei-deelement 10 bis zum in der Anordnung gestaffelt hintereinander letzten Abschei-deelement 10 (oder Abschlussabscheideelement 11) gemessenen - Dicke einer zur Aufnahme in dem Rahmen 50 bestimmten Abscheidekombination 30. Mit anderen Worten: Eine in einem Rahmen 50 platzierte Abscheidekombination 30 füllt diesen aus; eine in einem Rahmen 50 platzierte Abscheidekombination 30 nimmt dessen Innenvolumen vollständig oder zumindest im Wesentlichen vollständig ein. Bei einer in einem Rahmen 50 platzierten Abscheidekombination 30 gemäß Figur 15, Figur 16, Figur 18 und Figur 19 oder gemäß Figur 32 sowie der jeweils zugehörigen Beschreibung befindet sich das erste (vordere) Abscheideelement 10 unmittelbar hinter der Einströmöffnung 52 und das letzte (hintere) Abscheideelement 10 unmittelbar vor der Ausströmöffnung.

Die Darstellung in Figur 34 zeigt eine in einem (verschlossenen) Rahmen 50 platzierte Abscheidekombination 30. Teile der in dem Rahmen 50 platzierten Abscheidekombination 30 (bezeichnet ist der Abscheidebereich 14 von dessen vorderem Abscheideelement 10) sind durch die Einströmöffnung 52 im Rahmen 50 sichtbar.

Eine in einem Rahmen 50 platzierte Abscheidekombination 30 bildet zusammen mit dem Rahmen 50 eine Abscheidevorrichtung (Luftstromabscheidevorrichtung) 60. Eine solche Abscheidevorrichtung 60 oder eine Mehrzahl von gestaffelt hintereinander (in Richtung eines Rohgasstroms R gestaffelt hintereinander) angeordneten solchen Abscheidevorrichtungen 60 ist in grundsätzlich an sich bekannter Art und Weise zum Abscheiden von mit einem Rohgasstrom R mitgeführten Partikeln, insbesondere Farbpartikeln, verwendbar und zum Abscheiden von mit einem Rohgasstrom R mitgeführten Partikeln bestimmt.

Eine Abscheidevorrichtung 60 umfasst gleiche oder jeweils gruppenweise gleiche Abscheideelemente 10. Die Möglichkeit der Verwendung von gleichen Abscheideelementen 10 zum Bilden einer Abscheidevorrichtung 60 ergänzt den bereits weiter oben erwähnten Vorteil des geringen Platzbedarfs von Abscheideelementen 10 in flachem Zustand, denn bei gleichen Abscheideelementen 10 muss nur jeweils eine entsprechende Art von Abscheideelementen 10 an einen jeweiligen Verwendungsort geliefert werden.

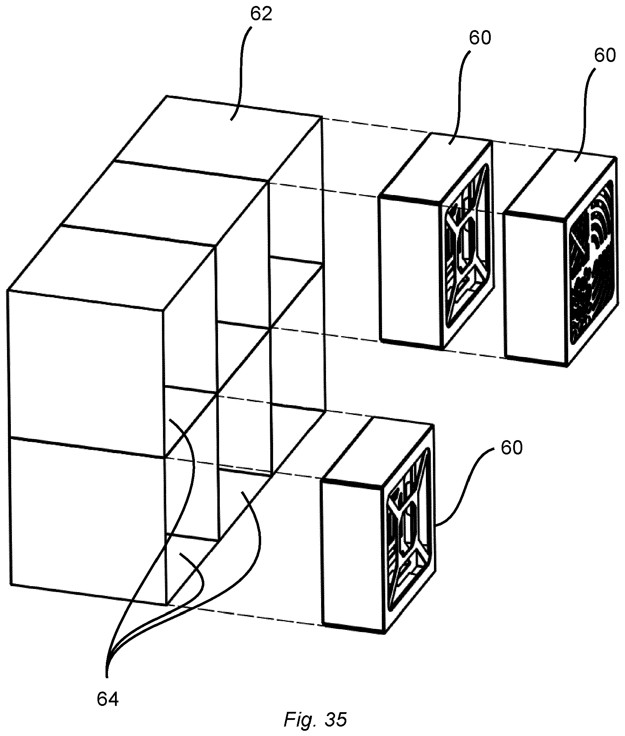

Die Darstellung in Figur 35 zeigt ein Strukturelement 62, insbesondere ein als Absaugwand 62 einer Lackieranlage (s. Fig. 36) fungierendes Strukturelement 62, mit mehreren Fächern 64, wobei jedes Fach 64 zur Aufnahme zumindest einer Abscheidevorrichtung 60 vorgesehen ist. In den Darstellungen in Figur 35 und Figur 36 ist eine aufrechte Absaugwand (eine Absaugwand mit einer vertikal orientierten Anströmfläche) gezeigt. Eine Verwendung des Strukturelements 62 kommt auch in "liegender" Form, zum Beispiel unter einer Gitterrostebene einer Lackieranlage mit einer dann horizontal orientierten Anströmfläche in Betracht.

Die Darstellung in Figur 35 zeigt - schematisch vereinfacht - eine Momentaufnahme beim Einsetzen von Abscheidevorrichtungen 60 in das Strukturelement 62 und die dortigen Fächer 64. Beispielhaft ist auch gezeigt, dass in ein einzelnes Fach 64 genau eine Abscheidevorrichtung 60 oder mehrere Abscheidevorrichtungen 60 eingesetzt werden können. Die Art und die Anzahl der Abscheidevorrichtungen 60 in dem Strukturelement 62 und die Art und die Anzahl der Abscheidevorrichtungen 60 in jeweils einem einzelnen Fach 64 ergeben sich dabei aufgrund der jeweiligen Anwendungssituation. Die Form und die Dimension einer Abscheidevorrichtung 60 sowie des oder jedes davon umfassten Abscheideelements 10 sind auf die Form und die Dimension eines einzelnen Fachs 64 abgestimmt. Ein Fach 64 oder jedes Fach 64 kann auch als Aufnahme oder Gehäuse (Abscheidegehäuse) für eine Abscheidevorrichtung 60 (oder eine Mehrzahl von Abscheidevorrichtungen 60) angesehen werden. Die Begriffe Aufnahme, Fach 64 und Gehäuse sind insoweit Synonyme.

Die Darstellung in Figur 36 zeigt ein zum Beispiel als Absaugwand 62 einer Lackieranlage fungierendes Strukturelement 62 gemäß Figur 35. In den Fächern 64 der Absaugwand 62 oder zumindest einzelnen Fächern 64 der Absaugwand 62 befindet sich jeweils zumindest eine Abscheidevorrichtung 60 der hier vorgeschlagenen Art. Bezüglich der Lackieranlage ist vor der Absaugwand 62 ("vor" in Richtung des Rohgasstroms R durch die Absaugwand 62 und die dortigen Abscheidevorrichtungen 60) beispielhaft ein als Lackierroboter fungierender Industrieroboter gezeigt. Ein zu lackierender Gegenstand ist nicht speziell gezeigt. Mittels einer Lackieranlage sind grundsätzlich beliebige Gegenstände, zum Beispiel Fahrzeugkarosserien, Fahrzeugkarosserieteile, Gerätegehäuse, Gerätegehäuseteile usw. lackierbar.

Einzelne im Vordergrund stehende Aspekte der hier vorgelegten Beschreibung lassen sich damit kurz wie folgt zusammenfassen: Angegeben wird ein Abscheideelement (Luftstromabscheideelement) 10 zum Abscheiden von mit einem Rohgasstrom mitgeführten Partikeln. Das Abscheideelement 10 weist einen Abscheidebereich 14 sowie an den Abscheidebereich 14 angrenzende oder von dem Abscheidebereich 14 ausgehende Verbindungslaschen 12 zum lösbaren Verbinden eines Abscheideelements 10 mit einem weiteren Abscheideelement 10 auf. Das Abscheideelement 10 weist darüber hinaus zumindest eine Tür 40 sowie zumindest einen Türeinsteckbereich 48 im Abscheidebereich 14 auf, wobei die Tür 40 zumindest einen Türeinsteckabschnitt 46 aufweist. Bei miteinander verbundenen Abscheideelementen 10 ergeben sich einzeln ausgeprägte Abscheideflächen (Prallflächen) in unterschiedlichen Ebenen. Der Abscheidebereich 14 eines jeden Abscheideelements 10 ist eine solche Abscheide-/Prallfläche. Die unterschiedlichen Ebenen ergeben sich aufgrund des beim Verbinden jeweils zweier Abscheideelemente 10 miteinander resultierenden Abstands zwischen den jeweiligen Abscheidebereichen 14. Optional ist der Abstand zwischen den Abscheidebereichen 14 zweier mittels der Verbindungslaschen 12 miteinander verbundener Abscheideelemente 10 anpassbar. Dafür ist jede Verbindungslasche 12 zwecks Anpassung ihrer wirksamen Länge zumindest in zwei Abschnitte 22, 24 unterteilt und jeder von jeweils einer Verbindungslasche 12 umfasste Abschnitt 22, 24 weist einen in einen Einsteckbereich 18 des weiteren Luftstromabscheideelements 10 einsteckbaren Einsteckabschnitt 26 auf. Angegeben werden schließlich eine mit solchen Abscheideelementen 10 gebildete Abscheidekombination 30 (Luftstromabscheidekombination) sowie eine zumindest eine Abscheidekombination 30 umfassende Abscheidevorrichtung (Luftstromabscheidevorrichtung) 60. Eine Abscheidevorrichtung 60 mit Abscheideelementen 10 der hier vorgeschlagenen Art kann auch als Abscheidemodul bezeichnet werden, denn eine solche Abscheidevorrichtung 60 ist modular mit zumindest einer weiteren Abscheidevorrichtung 60, welche ebenfalls Abscheideelemente 10 der hier vorgeschlagenen Art umfasst, und/oder mit zumindest einer im Stand der Technik bereits bekannten Abscheidevorrichtung, zum Beispiel einer Abscheidevorrichtung der eingangs genannten Art oder dergleichen, kombinierbar.

### Bezugszeichenliste

- 10: Luftstromabscheideelement ,Abscheideelement
- 11: Abscheideelement, Abschlussabscheideelement
- 12: Verbindungsmittel/Lasche (am Abscheideelement)
- 14: Abscheidebereich (des Abscheideelements)
- 16: Knickstelle
- 18: Einsteckbereich/Schlitz (im/am Abscheidebereich)
- 20: Loch (im Abscheidebereich)
- 22: (erster) Abschnitt (einer Lasche/eines Verbindungsmittels)
- 24: (zweiter) Abschnitt (einer Lasche/eines Verbindungsmittels)
- 26: Einsteckabschnitt (an einer Lasche/an einem Abschnitt einer Lasche)
- 30: Luftstromabscheidekombination, Abscheidekombination
- 40: Tür
- 42: Türabschnitt
- 44: Türabschnitt
- 46: Türeinsteckabschnitt (an einer Lasche/an einem Türabschnitt)
- 48: Türeinsteckbereich, Türeinsteckschlitz
- 50: Rahmen
- 52: Öffnung, Einströmöffnung
- 54: Verschlussmittel, -lasche
- 60: Luftstromabscheidevorrichtung, Abscheidevorrichtung/Abscheidemodul
- 62: Strukturelement/Absaugwand
- 64: Fach/Aufnahme (in Strukturelement/Absaugwand)

## Patentansprüche

1. Luftstromabscheideelement (10) zum Abscheiden von mit einem Rohgasstrom mitgeführten Partikeln und
mit einem Abscheidebereich (14) und Einsteckbereichen (18) sowie an den Abscheidebereich (14) anschließenden oder von dem Abscheidebereich (14) ausgehenden Verbindungslaschen (12) zum lösbaren Verbinden eines Luftstromabscheideelements (10) mit einem weiteren Luftstromabscheideelement (10),
mit zumindest einer Tür (40) sowie zumindest einem Türeinsteckbereich (48) im Abscheidebereich (14),
wobei die Tür (40) zumindest einen Türeinsteckabschnitt (46) aufweist.

2. Luftstromabscheideelement (10) nach Anspruch 1,
wobei die oder jede Tür (40) zwecks Anpassung einer wirksamen Länge der jeweiligen Tür (40) zumindest in zwei Türabschnitte (42, 44) unterteilt ist,
nämlich einen ersten, unmittelbar an den Abscheidebereich (14) angrenzenden Türabschnitt (42) und einen unmittelbar an den ersten Türabschnitt (42) angrenzenden zweiten Türabschnitt (44),
wobei jeder von jeweils einer Tür (40) umfasste Türabschnitt (42, 44) einen in einen Türeinsteckbereich (48) des weiteren Luftstromabscheideelements (10) einsteckbaren Türeinsteckabschnitt (46) aufweist.

3. Luftstromabscheideelement (10) nach Anspruch 2,
wobei jede Verbindungslasche (12) zwecks Anpassung einer wirksamen Länge der jeweiligen Verbindungslasche (12) zumindest in zwei Abschnitte (22, 24) unterteilt ist,
nämlich einen ersten, unmittelbar an den Abscheidebereich (14) angrenzenden Abschnitt (22) und einen unmittelbar an den ersten Abschnitt (22) angrenzenden zweiten Abschnitt (24),
wobei jeder von jeweils einer Verbindungslasche (12) umfasste Abschnitt (22, 24) einen in einen Einsteckbereich (18) des weiteren Luftstromabscheideelements (10) einsteckbaren Einsteckabschnitt (26) aufweist.

4. Luftstromabscheideelement (10) nach Anspruch 2 oder 3,
mit einer Knickstelle (16) zwischen zwei aufeinander folgenden Abschnitten (22, 24) einer Verbindungslasche (12) bzw. zwei aufeinander folgenden Türabschnitten (42, 44) einer Tür (40) und mit einem Ursprung eines Einsteckabschnitts (26) bzw. Türeinsteckabschnitts (46) im Bereich der Knickstelle (16).

5. Luftstromabscheideelement (10) nach einem der vorangehenden Ansprüche,
mit einem rechteckigen Abscheidebereich (14), insbesondere einem quadratischen Abscheidebereich (14),
wobei das Luftstromabscheideelement (10) mit einem weiteren Luftstromabscheideelement (10) in zumindest zwei verschiedenen Orientierungen verbindbar ist.

6. Luftstromabscheidekombination (30) mit einer Mehrzahl von miteinander verbundenen und dabei gestaffelt hintereinander angeordneten Luftstromabscheideelementen (10) nach einem der Ansprüche 1 bis 5.

7. Luftstromabscheidekombination (30) nach Anspruch 6,
mit einer alternierenden Abfolge einer Position der Türen (40).

8. Luftstromabscheidevorrichtung (60) zum Abscheiden von mit einem Rohgasstrom mitgeführten Partikeln
umfassend eine von einem Rahmen (50) aufgenommene Luftstromabscheidekombination (30) nach einem der Ansprüche 6 oder 7.

9. Lackieranlage mit einem Strukturelement (62) und einer Mehrzahl von in Aufnahmefächern (64) des Strukturelements (62) platzierten Luftstromabscheidevorrichtungen (60) nach Anspruch 8.

10. Verwendung eines Luftstromabscheideelements (10) nach einem der Ansprüche 1 bis 5, einer Luftstromabscheidekombination (30) nach einem der Ansprüche 6 oder 7, einer Luftstromabscheidevorrichtung (60) nach Anspruch 8 oder einer Lackieranlage nach Anspruch 9 zum Abscheiden von mit einem Rohgasstrom mitgeführten Partikeln.

11. Verfahren zum Abscheiden von mit einem Rohgasstrom mitgeführten Farbpartikeln, wobei der Rohgasstrom durch zumindest ein Luftstromabscheideelement nach einem der Ansprüche 1 bis 5 oder durch zumindest eine Luftstromabscheidekombination nach einem der Ansprüche 6 bis 7 oder durch zumindest eine Luftstromabscheidevorrichtung nach Anspruch 8 geleitet wird.

## Claims

1. An air flow separation element (10) for separating particles entrained in a raw gas stream, and
comprising a separation region (14) and insertion regions (18) as well as connecting tabs (12) that are adjacent to the separation region (14) or extend from the separation region (14) for detachably connecting an air flow separation element (10) to another air flow separation element (10),
comprising at least one door (40) and at least one door insertion region (48) in the separation region (14),
wherein the door (40) comprises at least one door insertion portion (46).

2. The air flow separation element (10) according to claim 1,
wherein the or each door (40) is divided at least into two door portions (42, 44) for the purpose of adjusting an effective length of the relevant door (40),
namely a first door portion (42) directly adjacent to the separation region (14) and a second door portion (44) directly adjacent to the first door portion (42),
wherein each door portion (42, 44) comprised by each door (40) comprises a door insertion portion (46) that can be inserted into a door insertion region (48) of the other air flow separation element (10).

3. The air flow separation element (10) according to claim 2,
wherein each connecting tab (12) is divided at least into two portions (22, 24) for the purposes of adjusting an effective length of the relevant connecting tab (12),
namely a first portion (22) directly adjacent to the separation region (14) and a second portion (24) directly adjacent to the first portion (22),
wherein each portion (22, 24) comprised by each connecting tab (12) comprises an insertion portion (26) that can be inserted into an insertion region (18) of the other air flow separation element (10).

4. The air flow separation element (10) according to claim 2 or 3,
comprising a bend point (16) between two successive portions (22, 24) of a connecting tab (12) or two successive door portions (42, 44) of a door (40) and comprising an origin of an insertion portion (26) or door insertion portion (46) in the region of the bend point (16).

5. The air flow separation element (10) according to any of the preceding claims,
comprising a rectangular separation region (14), in particular a square separation region (14),
wherein the air flow separation element (10) can be connected to another air flow separation element (10) in at least two different orientations.

6. An air flow separation combination (30) comprising a plurality of air flow separation elements (10) according to any of claims 1 to 5 that are interconnected and arranged to be staggered one behind the other in the process.

7. The air flow separation combination (30) according to claim 6,
comprising an alternating sequence of a position of the doors (40).

8. An air flow separation device (60) for separating particles entrained in a raw gas stream,
comprising an air flow separation combination (30) according to any of claims 6 or 7 received by a frame (50).

9. A paint-spray line comprising a structural element (62) and a plurality of air flow separation devices (60) according to claim 8, which are placed in receiving compartments (64) of the structural element (62).

10. Use of an air flow separation element (10) according to any of claims 1 to 5, an air flow separation combination (30) according to any of claims 6 or 7, an air flow separation device (60) according to claim 8, or a paint-spray line according to claim 9, for separating particles entrained in a raw gas stream.

11. A method for separating paint particles entrained in a raw gas stream, wherein the raw gas stream is guided through at least one air flow separation element according to any of claims 1 to 5 or through at least one air flow separation combination according to any of claims 6 to 7 or through at least one air flow separation device according to claim 8.

## Revendications

1. Élément (10) de séparation de flux d'air pour la séparation de particules transportées par un flux de gaz brut et
comprenant une zone de séparation (14) et des zones d'insertion (18) ainsi que des languettes de liaison (12) contiguës à ou s'étendant depuis la zone de séparation (14) pour relier de manière amovible un élément (10) de séparation de flux d'air à un autre élément (10) de séparation de flux d'air,
comprenant au moins une porte (40) ainsi qu'au moins une zone (48) d'insertion de porte dans la zone de séparation (14),
dans lequel la porte (40) comprend au moins une section (46) d'insertion de porte.

2. Élément (10) de séparation de flux d'air selon la revendication 1,
dans lequel la ou chaque porte (40) est divisée en au moins deux sections de porte (42, 44) afin d'adapter une longueur effective de la porte (40) respective,
à savoir une première section de porte (42) directement adjacente à la zone de séparation (14) et une seconde section de porte (44) directement adjacente à la première section de porte (42),
dans lequel chaque section de porte (42, 44) comprise dans une porte (40) respective comprend une zone (46) d'insertion de porte pouvant être insérée dans une zone (48) d'insertion de porte de l'autre élément (10) de séparation de flux d'air.

3. Élément (10) de séparation de flux d'air selon la revendication 2,
dans lequel chaque languette de liaison (12) est divisée en au moins deux sections (22, 24) afin d'adapter une longueur effective de la languette de liaison (12) respective,
à savoir une première section (22) directement adjacente à la zone de séparation (14) et une seconde section (24) directement adjacente à la première section (22),
dans lequel chaque section (22, 24) comprise dans une languette de liaison (12) respective comprend une zone (26) d'insertion pouvant être insérée dans une zone (18) d'insertion de l'autre élément (10) de séparation de flux d'air.

4. Élément (10) de séparation de flux d'air selon la revendication 2 ou 3,
comprenant un point de pliage (16) entre deux sections (22, 24) successives d'une languette de liaison (12) ou entre deux sections de porte (42, 44) successives d'une porte (40) et comprenant une origine d'une section d'insertion (26) ou d'une section (46) d'insertion de porte dans la zone du point de pliage (16).

5. Élément (10) de séparation de flux d'air selon l'une des revendications précédentes,
comprenant une zone de séparation (14) rectangulaire, en particulier une zone de séparation (14) carrée,
l'élément (10) de séparation de flux d'air pouvant être relié à un autre élément (10) de séparation de flux d'air selon au moins deux orientations différentes.

6. Combinaison (30) de séparation de flux d'air comprenant une pluralité d'éléments (10) de séparation de flux d'air reliés entre eux et disposés en quinconce les uns derrière les autres, selon l'une des revendications 1 à 5.

7. Combinaison (30) de séparation de flux d'air selon la revendication 6,
comprenant une succession alternée d'une position des portes (40).

8. Dispositif (60) de séparation de flux d'air pour la séparation de particules entraînées par un flux de gaz brut
comprenant une combinaison (30) de séparation de flux d'air montée sur un châssis (50), selon l'une des revendications 6 ou 7.

9. Installation de mise en peinture comprenant un élément structurel (62) et une pluralité de dispositifs (60) de séparation de flux d'air placés dans des compartiments de réception (64) de l'élément structurel (62), selon la revendication 8.

10. Utilisation d'un élément (10) de séparation de flux d'air selon l'une des revendications 1 à 5, d'une combinaison (30) de séparation de flux d'air selon l'une des revendications 6 ou 7, d'un dispositif (60) de séparation de flux d'air selon la revendication 8 ou d'une installation de mise en peinture selon la revendication 9 pour la séparation de particules entraînées par un flux de gaz brut.

11. Procédé de séparation de particules de peinture transportées par un flux de gaz brut, dans lequel le flux de gaz brut est acheminé à travers au moins un élément de séparation de flux d'air selon l'une des revendications 1 à 5, ou à travers au moins une combinaison de séparation de flux d'air selon l'une des revendications 6 à 7, ou à travers au moins un dispositif de séparation de flux d'air selon la revendication 8.
